# EUROPÄISCHE PATENTSCHRIFT

(11) **EP 3 096 423 B1**
(45) Veröffentlichungstag und Bekanntmachung des Hinweises auf die Patenterteilung: **13.11.2019**
(21) Anmeldenummer: 15168865.2
(22) Anmeldetag: 22.05.2015
(51) Int. Cl.: H02G 1/12

(54) **ABISOLIERZANGE**
ISOLATING GRIPPER
PINCE À DÉNUDER

(43) Veröffentlichungstag der Anmeldung: 23.11.2016
(73) Patentinhaber: Wezag GmbH Werkzeugfabrik, 35260 Stadtallendorf (DE)
(72) Erfinder: Zinser, Roman, 35279 Neustadt (DE)
(74) Vertreter: REHBERG HÜPPE + PARTNER

(56) Entgegenhaltungen:
- EP-A2- 0 309 871
- WO-A1-2005/036707
- DE-A1- 4 420 006
- DE-C1- 4 205 194
- DE-C1- 19 512 132
- DE-U1-202004 018 133
- JP-A- 2004 274 941

## Beschreibung

### TECHNISCHES GEBIET DER ERFINDUNG

Bei elektrischen Kabeln ist ein elektrischer Leiter, welche insbesondere mit einer Vielzahl von Litzen gebildet sind, zur elektrischen Isolation gegenüber der Umgebung mit einer isolierenden Ummantelung, insbesondere einer Isolierung aus Kunststoff, versehen. Für den elektrischen Anschluss des Kabels an Stecker oder beliebige andere elektrische Bauteile muss ein insbesondere hülsenartiger Teilbereich der Isolierung in einem Endbereich des Kabels beseitigt werden. Hierzu finden Abisolierzangen Einsatz, welche
- in einem Schneidhub der Abisolierzange die Ummantelung in dem Endbereich zumindest teilweise einschneiden,
- dann in einem Abreißhub den zuvor zumindest teilweise abgetrennten hülsenartigen Teilbereich der Isolierung "abreißen" und
- in einem Abziehhub den hülsenartigen Teilbereich der Isolierung von dem elektrischen Leiter abziehen.

### STAND DER TECHNIK

Die Druckschrift DE 37 33 358 C1 offenbart eine Abisolierzange, bei welcher im Bereich eines Zangenmauls von zwei Zangenbacken eine Aufnahme für ein Kabel gebildet ist. Mit Schließung der Handhebel erfolgt zunächst eine Schließung der Zangenbacken. An der Innenseite der Zangenbacken stützen sich beidseits des Kabels Messerhalter mit Abisoliermessern ab, welche mit zunehmender Schließung der Zangenbacken in einem Schneidhub die Ummantelung des Kabels einschneiden. Sind die Zangenbacken und damit die Abisoliermesser in einem einstellbaren Ausmaß geschlossen, für welches ein Einschneiden der Isolierung erfolgt ist, ist eine Schließstellung der Abisoliermesser erreicht und der Schneidhub beendet. Auf den Schneidhub folgt dann ein Abreißhub, in welchem die Abisoliermesser gemeinsam parallel zur Längsachse der Aufnahme und damit des Kabels gezogen werden, was zu einem Abreißen des hülsenartigen Teilbereichs der Isolierung und dem Abziehen desselben von dem elektrischen Leiter führt. Während dieses Abziehhubs gleiten die Messerhalter mit den daran gehaltenen Abisoliermessern unter Führung durch die Zangenbacken entlang der Zangenbacken. Diese Bewegung wird verursacht durch eine Zugstange, an der in einem Endbereich die scherenartigen verschwenkbaren Messerhalter angelenkt sind. Der andere Endbereich der Zugstange ist ungefähr mittig an einem Steuerhebel angelenkt. Ein Endbereich des Steuerhebels ist an einem beweglichen Handhebel angelenkt, während der andere Endbereich des Steuerhebels über eine Rolle an einer Steuerkulisse geführt ist, die von der beweglichen Zangenbacke ausgebildet ist. Während des Schneidhubs liegt die Rolle in einem Endbereich der Steuerkulisse an, womit der Steuerhebel den Schneidhub mit der Schließbewegung der Zangenbacken und damit der Abisoliermesser verursachen kann. Für hinreichend große Betätigungskräfte am Ende des Schneidhubs überwindet die Rolle eine eine Kraftschwelle vorgebende Erhöhung der Steuerkulisse. Die Rolle gleitet dann entlang der Steuerkulisse, was mit der Betätigung der Zugstange und damit dem Abreißhub und dem Abziehhub einhergeht. Am Ende des Abziehhubs gelangt die Rolle in den Bereich einer Abwinklung der Steuerkulisse, womit in einem Öffnungshub eine Öffnungsstellung der beweglichen Zangenbacke herbeigeführt wird. Mit der Öffnungsbewegung der beweglichen Zangenbacke bewegen sich die Messerhalter mit den Abisoliermessern weg von dem Kabel. Die Länge des Abziehhubs ist konstruktiv vorgegeben durch den Abstand der Erhöhung der Steuerkulisse von der Abwinklung der Steuerkulisse. Hierbei ist die Länge des Abziehhubs durch Dimensionierung der Steuerkulisse so vorgegeben, dass diese ausreichend ist, um den hülsenartigen Teilbereich der Ummantelung vollständig von dem elektrischen Leiter abzuziehen. Die Abisolierzange gemäß der Druckschrift DE 37 33 358 C1 besitzt zusätzlich eine Trenneinrichtung zum Durchtrennen eines Kabels zwecks Vorbereitung des Abisoliervorgangs, wobei auch die Trenneinrichtung durch Betätigen der Handhebel betätigt wird. Des Weiteren verfügt die Abisolierzange über eine Einstelleinrichtung, mittels welcher das Ausmaß der Schließbewegung der Abisoliermesser während des Schneidteilhubs einstellbar ist. Eine entsprechende Abisolierzange wird von der Anmelderin unter der Kennzeichnung "Scora 2" vertrieben, vgl. auf die Website www.wezag.de.

Die Druckschrift EP 2 056 416 A2 offenbart eine Abisolierzange, bei welcher ein fester Handhebel starr mit einer auf der gegenüberliegenden Seite von einer Längsachse der Abisolierzange angeordneten Zangenbacke verbunden ist. An dieser Zangenbacke ist ein beweglicher Handhebel angelenkt. Des Weiteren ist an dem die Zangenbacke und den festen Handhebel ausbildenden Grundkörper die andere Zangenbacke in einem Schwenklager angelenkt. Eine Betätigung dieser Zangenbacke erfolgt über einen Druckhebel. Dieser Druckhebel ist in einem Endbereich an dem beweglichen Handhebel angelenkt. In dem anderen Endbereich trägt der Druckhebel eine Rolle, mittels welcher der Druckhebel an der um die Schwenkachse verschwenkbaren Zangenbacke abgestützt ist. In dem Schneidhub führt die Verschwenkung des beweglichen Handhebels zur Aufbringung eines Schwenkmoments über den Druckhebel auf die bewegliche Zangenbacke, womit eine Schließung des Zangenmauls und das Einschneiden der Abisoliermesser in die Isolierung des Kabels verbunden ist. Am Ende des Schneidhubs verlagert der Druckhebel nicht weiter die bewegliche Zangenbacke. Vielmehr wälzt dann die Rolle des Druckhebels an der Kontaktfläche der Zangenbacke ab und betätigt über eine einer Zugstange zugeordnete zweite Rolle die Zugstange. Die hierdurch verursachte Verschiebung der Zugstange und der hieran auswechselbar gehaltenen Messerhalter mit Abisoliermessern führt zu einem Abreißhub und einem Abziehhub, für welche die Messerhalter und Abisoliermesser in der am Ende des Schneidhubs erreichten Schließstellung der Abisoliermesser koaxial zur Längsachse des Kabels entlang der Zangenbacken gleiten.

Während grundsätzlich möglich ist, dass mit der Abisolierzange der hülsenartige abgetrennte Teilbereich der Isolierung vollständig von dem elektrischen Leiter entfernt wird, kann auch wünschenswert sein, dass der hülsenartige Teilbereich in dem Abziehhub lediglich ein kleines Stück auf dem elektrischen Leiter von der restlichen Isolierung weg bewegt wird. In diesem Zustand schützt der abgetrennte Teilbereich der Ummantelung den elektrischen Leiter während der Bevorratung oder vor der Herstellung der angestrebten elektrischen Verbindung. Ist der elektrische Leiter mit mehreren Litzen ausgebildet, verhindert der nur teilweise abgezogene hülsenartige Teilbereich ein "Aufspleißen" der Litzen, welches die spätere Herstellung der Verbindung mit einem Stecker oder einem anderen elektrischen Bauteil erschweren kann und auch zu einem Abbruch einzelner Litzen führen kann. Wünschenswert kann hierbei sein, dass (bspw. je nach Durchmesser des Kabels, Durchmesser und Material des elektrischen Leiters und/oder Schichtdicke und Material der Isolierung) die Länge des teilweisen Abziehens des hülsenartigen Teilbereichs der Isolierung durch die Abisolierzange, also die Länge des Abziehteilhubs, individuell eingestellt werden kann. Gemäß der Druckschrift EP 2 056 416 A2 erfolgt eine Einstellung der Länge des Abziehhubs, indem mittels eines Anschlags eine Begrenzung der Bewegung der Zugstange erfolgt. Für die konstruktive Ausgestaltung des Anschlags offenbart die Druckschrift EP 2 056 416 A2 unterschiedliche Ausführungsformen: Für eine erste Ausführungsform ist der Anschlag mit einem verschwenkbaren, L-förmigen abgewinkelten Hebel ausgebildet, wobei eine Stirnseite eines Schenkels des Hebels den Anschlag für die Zugstange bildet. Somit gibt in der entsprechenden Schwenkstellung des Hebels die Länge des Schenkels, der den Anschlag für die Zugstange bildet, das Ende des Abziehhubs vor. Für eine andere Ausführungsform wird vorgeschlagen, dass der Anschlag für die Zugstange zur Vorgabe des Endes des Abziehhubs durch ein Dämpfungsglied in dem festen Handhebel vorgegeben wird. Für eine weitere Ausführungsform findet zur Bildung des Anschlags eine Art abgeflachte Nockenscheibe Einsatz, wobei die Nockenscheibe über eine umfangsseitige Verzahnung in unterschiedlichen Winkelstellungen zur Einstellung unterschiedlich langer Abziehhübe rastierbar ist. Des Weiteren schlägt die Druckschrift EP 2 056 416 A2 die Ausbildung des Anschlags für die Zugstange durch eine Blattfeder vor, welche dem Benutzer der Abisolierzange eine haptische Rückmeldung bei Erreichen des Endes des Abziehhubs, welches durch die Blattfeder vorgegeben wird, gibt. Für diese Ausführungsform ist bei Anlage der Zugstange an der Blattfeder und bei einer Erhöhung der auf die Abisolierzange aufgebrachten Handkräfte unter Erhöhung der elastischen Beaufschlagung der Blattfeder auch eine Vergrößerung des Abziehhubs möglich.

Aus dem nicht vorveröffentlichten Gebrauchsmuster DE 20 2015 100 507.5 ist eine Abisolierzange bekannt, welche über eine Sicherungseinrichtung verfügt, welche eine teilweise geschlossene Stellung oder eine vollständig geschlossene Stellung der Abisoliermesser sichert. Dies ist insbesondere für die Bevorratung der Abisolierzange von Vorteil, da bspw. ein Handwerker bei gesicherter geschlossener Stellung der Abisoliermesser nicht unbeabsichtigt in ein Zangenmaul der Abisolierzange greifen kann und sich an den Abisoliermessern verletzen kann. Andererseits sind bei Sicherung der geschlossenen Stellung die Abisoliermesser auch gegenüber Beschädigungen geschützt.

Weiterer Stand der Technik ist aus den Druckschriften DE 42 05 194 C1, DE 195 12 132 C1, WO 2005/036707 A1, DE 20 2004 018 133 U1, DE 44 20 006 A1 bekannt.

### AUFGABE DER ERFINDUNG

Der Erfindung liegt die Aufgabe zugrunde, eine Abisolierzange vorzuschlagen, welche hinsichtlich der Handhabung und/oder der Betriebssicherheit verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Der Erfindung liegt eine Analyse der Kraft- und Bewegungsverhältnisse an einer Abisolierzange zugrunde. Festgestellt worden ist hierbei, dass während des Schneidhubs verhältnismäßig große Kräfte auf die Handhebel der Abisolierzange aufgebracht werden müssen, um die Überführung der Abisoliermesser in die Schließstellung und das Einschneiden der Abisoliermesser in die Isolierung des Kabels herbeiführen zu können. Auch für das "Abreißen" des teilweise abgetrennten hülsenartigen Teilbereichs der Isolierung während des Abreißhubs sind verhältnismäßig große Kräfte aufzubringen. Nach erfolgtem Abreißen des hülsenartigen Teilbereichs der Isolierung wirken allerdings während des Abziehhubs verhältnismäßig kleine Kräfte, da für das Abziehen des hülsenartigen Teilbereichs der Isolierung lediglich die Gleitreibkräfte zwischen dem hülsenartigen Teilbereich der Isolierung und dem elektrischen Leiter überwunden werden müssen. Dieser Abfall der erforderlichen Betätigungskraft für die Handhebel der Abisolierzange mit dem Übergang vom Abreißhub zu dem Abziehhub hat zur Folge, dass sowohl die Herbeiführung des Schneidhubs als auch das Abreißen des hülsenartigen Teilbereichs der Isolierung von dem Benutzer der Abisolierzange feinfühlig und kontrolliert herbeigeführt werden kann. Mit dem Abreißen des hülsenartigen Teilbereichs der Ummantelung und dem plötzlichen Abfall der der Schließung der Handhebel entgegenwirkenden Gleitreibkraft hat eine nicht schnelle Anpassung der Handkräfte in Form einer plötzlichen Reduzierung der Handkräfte zur Folge, dass eine unkontrollierte plötzliche Schließbewegung der Handhebel erfolgt mit damit einhergehender schneller Durchführung des Abziehhubs. Dies ist grundsätzlich unerwünscht, da der Benutzer der Abisolierzange in diesem Fall den Eindruck hat, während des Abziehhubs eine verminderte Kontrolle des Bearbeitungsvorgangs des Kabels zu haben. Schlimmstenfalls umgreift der Benutzer die Handhebel der Abisolierzange derart, dass Fingerspitzen der Hand zwischen den Handhebeln angeordnet sind. Kommt es zu der plötzlichen schnellen Schließbewegung der Handhebel während des Abziehhubs, kann dies zu einem Prellen und Einklemmen der Fingerspitzen der Hand zwischen den Handhebeln führen. Diese Probleme werden im Rahmen der Erfindung wie folgt (zumindest teilweise) beseitigt:
Die erfindungsgemäße Abisolierzange verfügt über zwei Handhebel. Der Schließhub der Handhebel ist mit drei Teilhüben gebildet:
- In einem Schneidhub erfolgt eine Schließbewegung mindestens eines Abisoliermessers quer zu einer Längsachse einer Aufnahme für ein abzuisolierendes Kabel. Mit Beendigung des Schneidhubs ist eine Schließstellung der Abisoliermesser erreicht, in welcher eine Isolierung eines in der Aufnahme angeordneten Kabels teilweise eingeschnitten ist. Somit ist in der Schließstellung ein hülsenartiger Teilbereich der Isolierung teilweise (vorzugsweise in mindestens einem Teilumfangsbereich) abgetrennt.
- Des Weiteren verfügt der Schließhub der Handhebel über einen Abreißhub. Während des Abreißhubs, in dem die Abisoliermesser vorzugsweise in der Schließstellung verbleiben oder diese nur unwesentlich verlassen, wird das mindestens eine Abisoliermesser in Richtung der Längsachse der Aufnahme für das abzuisolierende Kabel bewegt, bis ein Abreißen des hülsenartigen Teilbereichs der Isolierung erfolgt ist.
- Während eines Abziehhubs erfolgt (nach dem teilweisen Abtrennen in dem Schneidhub und dem Abreißen in dem Abreißhub) eine Bewegung des mindestens einen Abisoliermessers in Richtung der Längsachse der Aufnahme für das abzuisolierende Kabel, wobei vorzugsweise die Abisoliermesser in der Schließstellung verbleiben oder ihre Stellung nur unwesentlich gegenüber der Schließstellung verändern. Während des Abziehhub wird der zuvor abgerissene hülsenartige Teilbereich der Isolierung gleitend über den elektrischen Leiter bewegt, wobei hier ein vollständiges Abziehen des hülsenartigen Teilbereichs von dem elektrischen Leiter erfolgen kann oder lediglich ein Teilabzug.

Erfindungsgemäß ist die Abisolierzange mit einem Feder- und/oder Dämpfungselement ausgestattet. Dieses Feder- und/oder Dämpfungselement kommt erst (exakt oder ungefähr) mit dem Übergang vom Abreißhub zum Abziehhub zur Wirkung. Somit beeinflusst das Feder- und/oder Dämpfungselement die Kraftverhältnisse an der Abisolierzange während des Schneidhubs sowie während des Abreißhubs nicht, womit die Kraftverhältnisse durch die Kinematik und anderweitige Feder- und/oder Dämpfungselemente der Abisolierzange vorgegeben werden kann und das erfindungsgemäß eingesetzte Feder- und/oder Dämpfungselement keine zusätzlichen Kräfte erzeugt, die zur Durchführung des Schneidhubs und des Abreißhubs überwunden werden müssen. Kommt hingegen mit dem Übergang vom Abreißhub zum Abziehhub das Feder- und/oder Dämpfungselement zur Wirkung, so erzeugt dieses während des Abziehhubs eine Feder- und/oder Dämpfungskraft, die der Schließung der Handhebel entgegengerichtet ist. Mit dieser zusätzlich während des Abziehhubs wirkenden Feder- und/oder Dämpfungskraft kann der zuvor erläuterte Abfall der der Schließung der Handhebel entgegen gerichteten Kraft zumindest teilweise kompensiert werden, womit auch das Auftreten der zuvor erläuterten unerwünschten Effekte, insbesondere eine abrupte Schließbewegung der Handhebel nach Beendigung des Abreißhubs, zumindest gemindert werden kann.

Dadurch, dass das Feder- und/oder Dämpfungselement lediglich in einem Teilhub, nämlich während des Abziehhubs, wirksam wird, wirkt eine über den Schließhub nichtlineare Kraftkomponente, welche vorteilhaft für die Handhabung und Bediensicherheit der Abisolierzange gestaltet werden kann.

Die erfindungsgemäße Abisolierzange verfügt über einen Antriebsmechanismus mit einem Hebel. Die mechanischen Randbedingungen des Hebels ändern sich beim Übergang von dem Schneidhub zu dem Abreißhub. Um lediglich einige nicht beschränkende Beispiele zu nennen, kann es sich bei einem derartigen Hebel um den Steuerhebel gemäß der Druckschrift DE 37 33 358 C1 handeln, dessen Veränderung der mechanischen Randbedingungen beim Übergang von dem Schneidhub zu dem Abreißhub in dem Überwinden der eine Kraftschwelle vorgebenden Erhöhung der Steuerkulisse durch die Rolle des Steuerhebels mit der darauf folgenden Bewegung entlang der Steuerkulisse besteht. Für Ausführungsformen entsprechend EP 2 056 416 A2 ist der Hebel als Druckhebel ausgebildet, wobei für diese Ausführungsform die Veränderung der mechanischen Randbedingungen des Hebels darin bestehen, dass während des Abreißhubes, aber nicht während des Schneidhubs die Rolle des Druckhebels entlang der Betätigungsfläche der Zangenbacke abwälzt und über die Rolle der Zugstange die Zugstange in Bewegung versetzt. Erfindungsgemäß ist während des Schneidhubs und während des Abreißhubs der Hebel mit einem Spiel zu dem Feder- und/oder Dämpfungselement angeordnet. Infolge dieses Spiels beeinflusst das Feder- und/oder Dämpfungselement während des Schneidhubs und des Abreißhubs die Kraftverhältnisse an der Abisolierzange nicht. Mit dem Übergang vom Abreißhub zum Abziehhub wird das Spiel beseitigt, womit dann während des folgenden Abziehhubs das Feder- und/oder Dämpfungselement den Hebel beaufschlagen kann zur Erzeugung einer der Schließung der Handhebel entgegen gerichteten Feder- und/oder Dämpfungskraft.

Erfindungsgemäß ist das Feder- und/oder Dämpfungselement an dem beweglichen Handhebel gehalten.

Mittels der Einwirkung des Feder- und/oder Dämpfungselements auf einen Hebel können die Gestaltungsmöglichkeiten für die Charakteristik der Feder- und/oder Dämpfungskraft während des Abziehhubs erweitert werden. So kann bspw. der Hebel während des Abziehhubs seine Winkelstellung ändern, womit je nach Winkel unterschiedliche Kraftänderungen an dem Feder- und/oder Dämpfungselement erzeugt werden können.

Um konstruktiv zu ermöglichen, dass das Feder- und/oder Dämpfungselement erst mit dem Übergang von dem Abreißhub zum Abziehhub zur Wirkung kommt, gibt es vielfältige Möglichkeiten. Um lediglich einige nicht beschränkende Beispiele zu nennen, kann die Ankopplung des Feder- und/oder Dämpfungselements über ein Langloch erfolgen, wobei das Langloch auch das Spiel vorgeben kann und wobei mit dem Übergang vom Abreißhub zum Abziehhub die Begrenzung des Langlochs erreicht wird. Möglich ist auch, dass das Feder- und/oder Dämpfungselement mit dem Übergang vom Abreißhub zum Abziehhub einen Gleitkontakt mit einem benachbarten Bauelement ausbildet. Für einen besonderen Vorschlag der Erfindung weist der Hebel eine drehbare Rolle auf. Die drehbare Rolle tritt mit dem Übergang vom Abreißhub zum Abziehhub mit dem Feder- und/oder Dämpfungselement in Wechselwirkung, wobei dann während des Abziehhubs die Rolle an dem Feder- und/oder Dämpfungselement abwälzen kann. Hierdurch können unerwünschte Reibungseffekte zumindest reduziert werden.

In weiterer Ausgestaltung der erfindungsgemäßen Abisolierzange weist der Hebel auf jeder Seite eine Rolle auf. Die beiden Rollen besitzen dann eine gemeinsame Rotationsachse. Die Rollen treten jeweils mit dem Übergang vom Abreißhub zum Abziehhub mit dem Feder- und/oder Dämpfungselement in Wechselwirkung. Für diese Ausgestaltung erfolgt die Aufteilung der erzeugten Feder- und/oder Dämpfungskraft auf zwei Kontaktflächen, welche jeweils zwischen einer Rolle und dem Feder- und/oder Dämpfungselement ausgebildet ist. Hierbei kann u. U. trotz des Einsatzes von zwei Rollen ein einstückiges, beide Rollen kontaktierendes Feder- und/oder Dämpfungselement eingesetzt werden. Ebenfalls möglich ist aber auch, dass zwei Teil-Feder- und/oder Dämpfungselemente Einsatz finden, welche jeweils einen Kontakt mit einer zugeordneten Rolle ausbilden.

Wird die Abisolierzange zum Abisolieren von unterschiedlichen Kabeln, insbesondere Kabeln unterschiedlicher Durchmesser des elektrischen Leiters und/oder unterschiedlicher Schichtdicken der Isolierung, verwendet, tritt unter Umständen der Übergang von dem Abreißhub zum Abziehhub in unterschiedlichen Schließstellungen der Abisolierzange auf. So muss für das Abisolieren eines Kabels mit kleinem Durchmesser zunächst ein großer Teil des Schließhubs der Handhebel genutzt werden, um die Abisoliermesser so weit zu schließen, dass diese zur Anlage an die Mantelfläche des Kabels kommen, bevor der Schneidhub beginnt. In diesem Fall liegt der Übergang vom Abreißhub zum Abziehhub erst am Ende des Schließhubs der Handhebel. Hingegen erfolgt für das Abisolieren eines Kabels mit größerem Durchmesser der Übergang vom Abreißhub zum Abziehhub bereits nach Durchlaufen eines kleineren Teilhubs des Schließhubs der Handhebel. Möglich ist, dass die Auslegung der Abisolierzange derart erfolgt, dass das Feder- und/oder Dämpfungselement exakt zur Wirkung kommt, wenn für das größte abzuisolierende Kabel der Übergang vom Abreißhub zum Abziehhub erreicht ist. Damit wird in Kauf genommen, dass für kleinere Kabel das Feder- und/oder Dämpfungselement etwas zu früh, also noch während des Abreißhubs (oder sogar während des Schneidhubs) zur Wirkung kommt. Möglich ist auch, dass eine Auslegung der Abisolierzange so erfolgt, dass für sämtliche mit der Abisolierzange abzuisolierenden Durchmessern von Kabeln ein optimales Ergebnis erreicht wird, wozu bspw. eine Auslegung derart erfolgt, dass für eine mittleren abzuisolierenden Durchmesser das Feder- und/oder Dämpfungselement zur Wirkung kommt, wenn der Übergang vom Abreißhub zum Abziehhub erreicht ist.

Die Handhabung der erfindungsgemäßen Abisolierzange kann verbessert werden, wenn das Spiel zwischen dem Feder- und/oder Dämpfungselement und dem Hebel einstellbar ist, so dass durch die Einstellung dieses Spiels dem Durchmesser des abzuisolierenden Kabels Rechnung getragen werden kann, so dass das Feder- und/oder Dämpfungselement exakt zur Wirkung kommt, wenn der Übergang vom Abreißhub zum Abziehhub erreicht ist. Für die Einstellbarkeit des Spiels zwischen dem Feder- und/oder Dämpfungselement und dem Hebel gibt es vielfältige Möglichkeiten. Um lediglich einige nicht beschränkende Beispiele zu nennen, kann die Einstellung des Spiels zwischen dem Feder- und/oder Dämpfungselement und dem Hebel dadurch erfolgen, dass eine Position der Rotationsachse der mindestens einen Rolle des Hebels verändert wird. Beispielsweise kann die Rolle über einen Bolzen gegenüber dem Grundkörper des Hebels gelagert sein, wobei der Bolzen in verschiedene Bohrungen des Hebels einsetzbar ist oder als Exzenterbolzen ausgebildet sein kann, mit dessen Verdrehung eine Verlagerung der Rotationsachse der Rolle erfolgt. Für eine andere Ausgestaltung erfolgt die Einstellung des Spiels durch eine Veränderung der Position des Feder- und/oder Dämpfungselements. Möglich ist hierbei, dass eine Verstellung des Spiels in Stufen, welche mit unterschiedlichen Durchmessern des Kabels korrelieren, oder stufenlos erfolgt.

Für die Ausgestaltung des Feder- und/oder Dämpfungselements gibt es vielfältige Möglichkeiten. So kann bspw. das Feder- und/oder Dämpfungselement als gewundene Feder, Schenkelfeder u. ä. ausgebildet sein, um nur einige nicht beschränkende Beispiele zu nennen. Für einen besonderen Vorschlag der Erfindung ist das Feder- und/oder Dämpfungselement mit einem Elastomerkörper, bspw. einem Polyurethan-Körper gebildet.

Eine weitere Ausgestaltung der Erfindung widmet sich der konstruktiven Ausgestaltung und Integration des Feder- und/oder Dämpfungselements in die Abisolierzange. Für diesen Vorschlag der Erfindung ist das Feder- und/oder Dämpfungselement in einen Handhebel eingesetzt, ohne dass zwingend eine zusätzliche Sicherung des Feder- und/oder Dämpfungselements in dem Handhebel durch eine Presspassung, eine stoffschlüssige Verbindung, eine Verschraubung u. ä. erforderlich ist. Vielmehr erfolgt die Sicherung des Feder- und/oder Dämpfungselements in dem Handhebel, indem nach dem Einsetzen desselben in den Handhebel ein Deckel mit dem Handhebel montiert wird, welcher die Entnahme des Feder- und/oder Dämpfungselements aus dem Handhebel blockiert. Dieser Deckel ist Bestandteil einer im Bereich des Handhebels gebildeten Vorratseinrichtung, die einer Bevorratung mindestens eines Zubehörteils der Abisolierzange dient. Hinsichtlich weiterer Details für eine derartige im Bereich des Handhebels gebildeten Vorratseinrichtung wird auf die nicht vorveröffentlichte europäische Patentanmeldung mit dem Aktenzeichen EP 14 177 831.6-1701 verwiesen.

Gemäß einem weiteren Vorschlag der Erfindung wird in der Abisolierzange das Feder- und/oder Dämpfungselement multifunktional genutzt: In diesem Fall verfügt die Abisolierzange auch über eine Trenneinrichtung zum Durchtrennen eines Kabels, welche ebenfalls über die Handhebel betätigt wird. Das Feder- und/oder Dämpfungselement wird auch in einem letzten Teilhub für das Durchtrennen des Kabels durch die Trenneinrichtung wirksam. Dieser Ausgestaltung liegt die Erkenntnis zugrunde, dass bei einem Durchtrennen eines Kabels mit einer Trenneinrichtung zunächst mit zunehmendem Eintritt eines Trennmessers in das Kabel die Kontaktfläche bzw. Kontaktlänge der Klinge des Trennmessers mit dem Kabel ansteigt, bis die Kontaktlänge dem Durchmesser des Kabels entspricht. Hiermit geht ein Anstieg der aufzubringenden Kraft auf die Handhebel einher. In der zweiten Hälfte des Durchtrennens des Kabels verringert sich dann wieder die Kontaktlänge des Trennmessers mit dem Kabel, wobei am Ende nicht mehr der elektrische Leiter, sondern die leichter zu durchtrennende Isolierung durchtrennt werden muss. Somit fällt auch hier die aufzubringende Kraft ab. Mit dem Feder- und/oder Dämpfungselement kann auch am Ende des Trennvorgangs einer Erhöhung der Trenngeschwindigkeit und/oder einer Verringerung der erforderlichen Betätigungskraft entgegengenwirkt werden.

Gemäß einer Auslegungsvariante der erfindungsgemäßen Abisolierzange kommt das Feder- und/oder Dämpfungselement beim Abisolieren eines Kabels mit einem Außendurchmesser von 7,5 mm zur Wirkung nach 30 bis 50 % des Schließhubs der Handhebel. Ebenfalls möglich ist, dass das Feder- und/oder Dämpfungselement bei einem Außendurchmesser des Kabels von 3,5 mm nach 40 % bis 60 % des Schließhubs der Handhebel zur Wirkung kommt. Alternativ oder kumulativ möglich ist, dass bei einem Außendurchmesser von 1,3 mm des Kabels das Feder- und/oder Dämpfungselement nach 50 % bis 65 % des Schließhubs der Handhebel zur Wirkung kommt. Bei den vorgenannten Außendurchmessern handelt es sich um die Nenndurchmesser, wobei auch möglich ist, dass der Außendurchmesser von den angegebenen Außendurchmessern um +/- 0,5 mm oder +/- 0,2 mm abweicht.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Ansicht eine Abisolierzange.
- **Fig. 2**: zeigt die Abisolierzange gemäß Fig. 1 in einem Längsschnitt durch die Zangenkopfebene, wobei sich die Abisolierzange in dem Schneidhub befindet.
- **Fig. 3**: zeigt die Abisolierzange gemäß Fig. 1 und 2 in einem Längsschnitt durch die Zangenkopfebene, wobei sich die Abisolierzange in dem Abziehhub befindet.
- **Fig. 4**: zeigt in einer räumlichen Explosionsdarstellung einen Handhebel mit Feder- und/oder Dämpfungselement sowie Deckel für eine Vorratseinrichtung.
- **Fig. 5**: zeigt in einer räumlichen Explosionsdarstellung einen Hebel mit Grundkörper, Lagerbolzen, Rolle und Fixierbolzen, womit eine Verstelleinrichtung zur Einstellung eines Spiels während des Schneidhubs gebildet ist.
- **Fig. 6 und 7**: zeigen eine Abisolierzange in einem Längsschnitt durch die Zangenkopfebene, wobei die Verstelleinrichtung gemäß Fig. 5 in unterschiedlichen Betriebsstellungen dargestellt ist.
- **Fig. 8 und 9**: zeigen in einem Längsschnitt durch die Zangenkopfebene eine Abisolierzange, bei welcher eine Verstelleinrichtung mit einem bewegbaren Feder- und/oder Dämpfungselement ausgebildet ist und die Verstelleinrichtung in unterschiedlichen Betriebsstellungen dargestellt ist.
- **Fig. 10**: zeigt die Abisolierzange gemäß Fig. 8 und 9 in einer räumlichen Ansicht.
- **Fig. 11**: zeigt einen beispielhaften Verlauf der Betätigungskraft an den Handhebeln einer Abisolierzange über den Schließhub der Handhebel.

### FIGURENBESCHREIBUNG

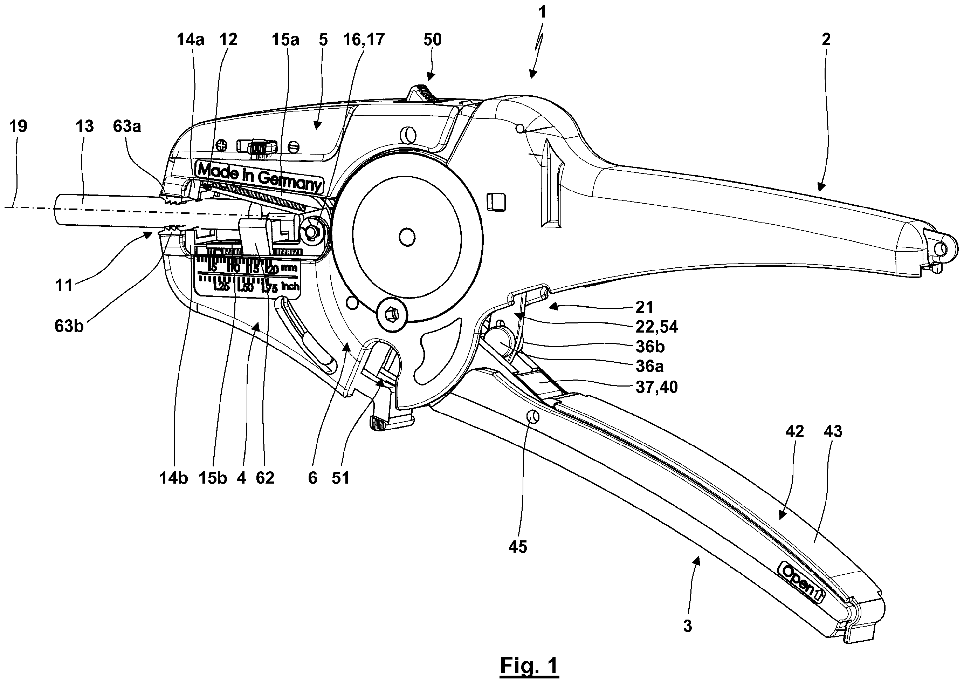

In den **Fig. 1 bis 3** ist eine mögliche Ausführungsform einer Abisolierzange 1 dargestellt. Diese verfügt über einen festen Handhebel 2 und einen beweglichen Handhebel 3. Für die Herbeiführung eines Schließhubs der Abisolierzange 1 wird der bewegliche Handhebel 3 durch Aufbringung von Betätigungskräften durch die Hand des Benutzers in Richtung des festen Handhebels 2 verschwenkt.

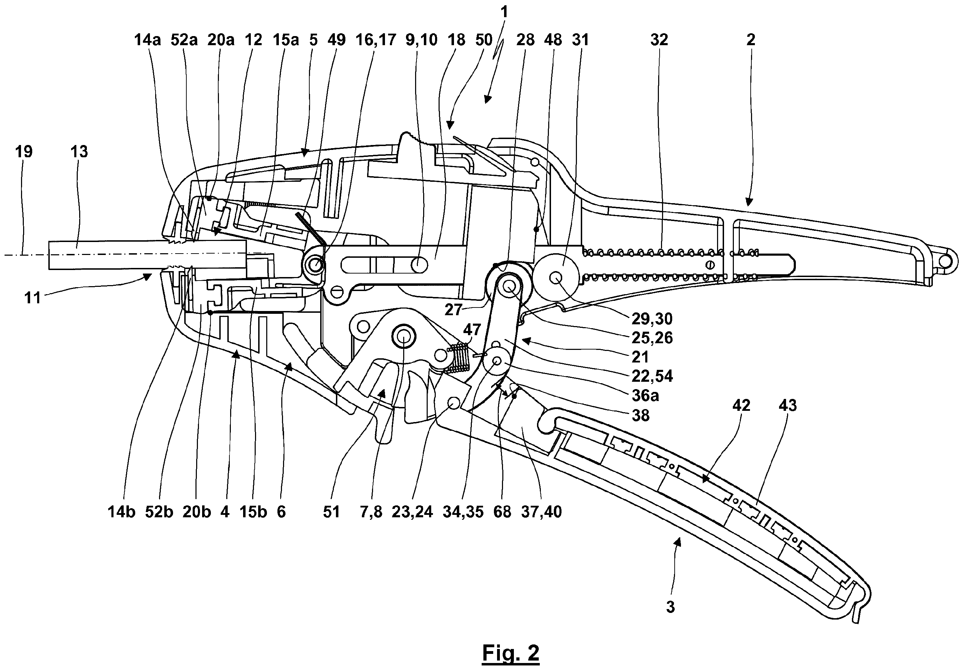

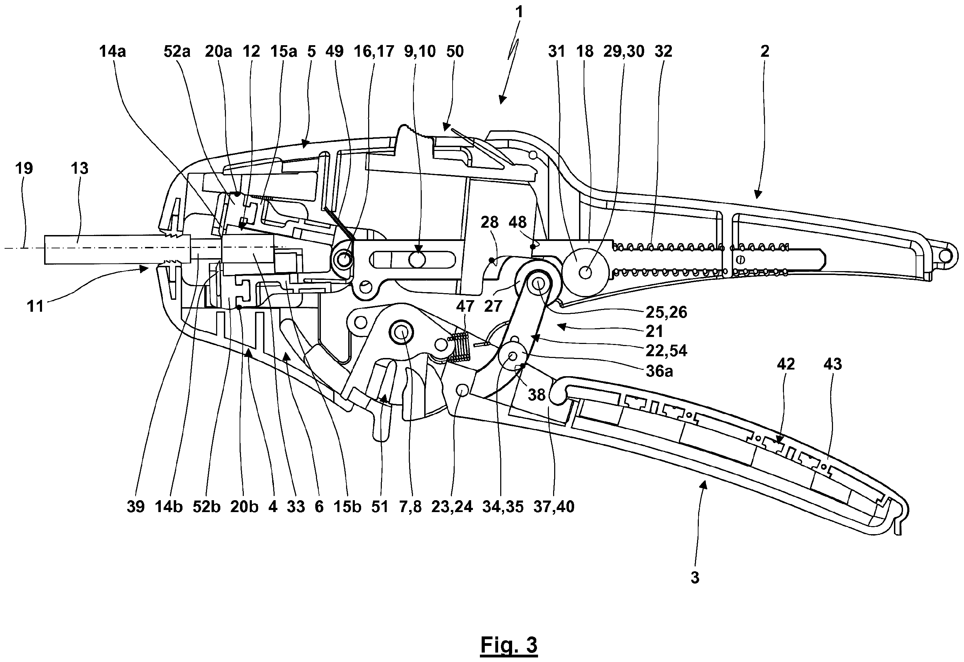

Der feste Handhebel 2 wird als "fester Handhebel" bezeichnet, da dieser starr, hier einstückig mit der auf der gegenüberliegenden Seite angeordneten Zangenbacke 4 ausgebildet ist. Der feste Handhebel 2 und die Zangenbacke 4 sind somit Teil eines Grundkörpers 6, an welchem beweglich andere, während der Betätigung der Abisolierzange 1 bewegte Teile gelagert sind. Hierbei erfolgt vorrangig die Bewegung der Teile in der Zeichenebene gemäß **Fig. 2** **und** **3****,** welche der Schwenkebene der Handhebel 2, 3 entspricht und eine Längsschnittebene durch den Zangenkopf bildet.

Der bewegliche Handhebel 3 ist in einem Lager 7, der hier mit einem Lagerbolzen 8 gebildet ist, verschwenkbar an dem Grundkörper 6 gelagert. Die verschwenkbare Lagerung der beweglichen Zangenbacke 5 erfolgt über ein Lager 9, welches hier ebenfalls mit einem Lagerbolzen 10 gebildet ist.

Ein Zangenmaul 11 der Abisolierzange 1 bildet eine Aufnahme 12 für ein abzuisolierendes Kabel 13 aus. In dem Zangenmaul 11 befinden sich beidseits der Aufnahme 12 Abisoliermesser 14a, 14b, welche jeweils an Messerhaltern 15a, 15b gehalten sind. In dem den Abisoliermessern 14a, 14b abgewandten Endbereichen sind die Messerhalter 15a, 15b scherenartig verschwenkbar über ein Lager 16, welches hier mit einem Lagerbolzen 17 gebildet ist, an einer Zugstange 18 angelenkt. Die Messerhalter 15a, 15b bilden hierbei ein V, welches sich zur Bildung der Aufnahme 12 in Richtung des Zangenmauls 11 öffnet. Während des Schneidhubs verringert sich mit einer Schließung der Handhebel 2, 3 der Öffnungswinkel des V, womit sich die Abisoliermesser 14a, 14b aufeinander zu bewegen und die Abisoliermesser 14a, 14b in eine Isolierung des Kabels 13 einschneiden können. Diese Bewegung der Abisoliermesser 14a, 14b korreliert mit der Schließbewegung der Zangenbacken 4, 5. Hingegen erfolgt während eines Abreißhubs und eines Abziehhubs die Bewegung der Abisoliermesser 14a, 14b, der Messerhalter 15a, 15b sowie der Zugstange 18 in Richtung einer Längsachse 19 der Aufnahme 12 und des Kabels 13 von dem Zangenmaul 11 weg. Während dieser Bewegung ändert sich der Öffnungswinkel des V der Messerhalter 15a, 15b nicht oder nicht wesentlich, wobei das Entsprechende für die Zangenbacken 4, 5 gilt. Im Folgenden wird auch der Schneidhub als Schwenkhub bezeichnet, während dessen eine Verschwenkung der Zangenbacken 4, 5 und der Messerhalter 15a, 15b mit den Abisoliermessern 14a, 14b mit Veränderung des Öffnungswinkels des V erfolgt. Hingegen werden der Abreißhub und der Abziehhub auch gemeinsam als Verschiebehub bezeichnet, während dessen die Bewegung der Zugstange 18 mit den Messerhaltern 15a, 15b und Abisoliermessern 14a, 14b ohne wesentliche Verschwenkung derselben und ohne Veränderung des Öffnungswinkels V entlang der Längsachse 19 erfolgt.

Die Messerhalter 15a, 15b und/oder Abisoliermesser 14a, 14b sind außenliegend jeweils über einen Gleitkontakt 20a, 20b an der zugeordneten Zangenbacke 4, 5 abgestützt. Während des Schwenkhubs werden Betätigungskräfte von den Zangenbacken 4, 5 an die Messerhalter 15a, 15b und/oder Abisoliermesser 14a, 14b über den Gleitkontakt 20a, 20b übertragen, ohne dass es zu einer signifikanten gleitenden Bewegung im Bereich des Gleitkontakts 20 kommt. Hingegen erfolgt während des Verschiebehubs eine relative Bewegung der Abisoliermesser 14a, 14b und der Messerhalter 15a, 15b im Bereich des Gleitkontakts 20 gegenüber den Zangenbacken 4,5.

Für die Erzeugung einerseits des Schwenkhubs und andererseits des an den Schwenkhub anschließenden Verschiebehubs mit einer durchgehenden Schwenkbewegung der Handhebel 2, 3 aufeinander zu verfügt die Abisolierzange 1 über einen Antriebsmechanismus 21. Der Antriebsmechanismus 21 ist einerseits zwischen die Handhebel 2, 3 und die Zangenbacken 4, 5 zwischengeschaltet, um den Schwenkhub zu bewirken, sowie andererseits zwischen die Handhebel 2, 3 und die Zugstange 18 zwischengeschaltet, um den Verschiebehub herbeizuführen.

Der Antriebsmechanismus 21 verfügt über einen Hebel 22, welcher mit einem Grundkörper 54 gebildet ist und als Druckhebel ausgebildet ist. Für das dargestellte Ausführungsbeispiel verfügt der Grundkörper 54 über eine leichte Kröpfung oder Krümmung, ohne dass dieses zwingend der Fall ist. Der Grundkörper 54 ist in einem Endbereich in einem Lager 23, welcher hier mit einem Lagerbolzen 24 gebildet ist, an dem beweglichen Handhebel 3 angelenkt. In dem anderen Endbereich verfügt der Hebel 22 über eine in einem Lager 25, hier mit einem Lagerbolzen 26, gegenüber dem Grundkörper 54 drehbar gelagerte Rolle 27. Die Rolle 27 bildet einen wälzenden Kontakt mit einer Betätigungskontur 28 der beweglichen Zangenbacke 5 aus. Während des Schneidhubs ändert sich der Kontakt der Rolle 27 an der Betätigungskontur 28 nicht, so dass es zu keiner wälzenden Bewegung der Rolle 27 gegenüber der Betätigungskontur 28 kommt. Die auf die Handhebel 2, 3 von dem Benutzer applizierte Betätigungskraft führt zu einer Kraft in dem Hebel 22, welche zu einer ersten Komponente führt, welche auf die bewegliche Zangenbacke 5 im Bereich der Betätigungskontur 28 wirkt und in Umfangsrichtung um das Lager 9 orientiert ist, womit eine Schließkraft auf die bewegliche Zangenbacke 5 herbeigeführt wird. Eine etwaige zweite Komponente der Kraft in dem Hebel 22, welche radial zu dem Lager 9 orientiert ist, existiert während des Schneidhubs nicht oder wird durch andere, im Folgenden beschriebene Maßnahmen so abgestützt, dass diese nicht zur Bewegung der Rolle 27 entlang der Betätigungskontur 28 führt.

An der Zugstange 18 ist drehbar in einem hier mit einem Lagerbolzen 29 gebildeten Lager 30 eine Rolle 31 gelagert. Die Zugstange 18 ist für eine Bewegung koaxial oder parallel zur Längsachse 19 verschieblich gegenüber dem Grundkörper 6 gelagert. Die Zugstange 18 ist hierbei durch eine vorgespannte Feder 32 in Richtung ihres Verschiebe-Freiheitsgrads und in Richtung des Zangenmauls 11 beaufschlagt, wobei die Rolle 31 über die Feder 32 gegen die Rolle 27 des Hebels 22 gedrückt wird. Infolge der Vorspannung der Feder 32 und der auf die Rolle 27 des Hebels 22 ausgeübten Vorspannkraft wird eine wälzende Bewegung der Rolle 27 gegenüber der Betätigungskontur 28 während des Schneidhubs verhindert. Am Ende des Schneidhubs kann aber die Kraft in dem Hebel 22 die Zugstange 18 mit der Rolle 31 gegen die Beaufschlagung der Feder 32 von dem Zangenmaul 11 weg schieben, da die von dem Hebel 22 in dem Kontakt zwischen den Rollen 27, 31 herbeigeführte Kraft größer ist als die von der Feder 32 erzeugte Vorspannkraft. Das Überschreiten der Vorspannkraft der Feder 32 kann einerseits erfolgen, da die Kraft in dem Hebel 22 mit der Schließbewegung der Handhebel 2, 3 sukzessive erhöht wird. Möglich ist aber auch, dass mit der Schließbewegung der Handhebel 2, 3 und der damit einhergehenden Verschwenkung der beweglichen Zangenbacke 5 eine Verschwenkung der Betätigungskontur 28 erfolgt, womit über die Rolle 27 eine zunehmende Umlenkung der Kraft in dem Hebel 22 in Richtung des Verschiebe-Freiheitsgrads der Zugstange 18 erfolgt. Mit Einsetzen der Bewegung der Zugstange 18 ist der Übergang von dem Schwenkhub zu dem Verschiebehub, nämlich von dem Schneidhub zum Abreißhub herbeigeführt.

Während des Schneidhubs haben die Abisoliermesser 14a, 14b auf gegenüberliegenden Seiten des Kabels 13 jeweils einen Teilumfangsbereich der Isolierung eingeschnitten. Während des ersten Teils des Verschiebehubs, nämlich dem Abreißhub, erfolgt ein Abreißen des während des Schneidhubs teilweise abgetrennten hülsenartigen Teilbereichs 33 der Isolierung. Mit dem vollständigen Abreißen des Teilbereichs 33 erfolgt der Übergang von dem Abreißhub zu dem Abziehhub. Vorzugsweise erfolgt während des Abreißhubs eine Bewegung der Abisoliermesser 14a, 14b bzw. der Zugstange 18 in Richtung der Längsachse 19 um 6.0 mm bis 8.0 mm, insbesondere 6.5 mm bis 7.5 mm.

Der Hebel 22 verfügt über eine weitere, drehbar über ein Lager 34, hier mit einem Lagerbolzen 35, gegenüber dem Grundkörper 54 gelagerte Rolle 36. Während des Schneidhubs ist zwischen dem Hebel 22 und einem Feder- und/oder Dämpfungselement 37 ein Spiel 68 ausgebildet. Mit dem Übergang vom Abreißhub zum Abziehhub tritt die Mantelfläche der Rolle 36 in Kontakt mit dem an dem beweglichen Handhebel 3 gehaltenen Feder- und/oder Dämpfungselement 37. Hierbei erfolgt die Beaufschlagung des Feder- und/oder Dämpfungselements 37 durch die Rolle 36 derart, dass eine weitere Verschwenkung des Hebels 22 um das Lager 23 gegenüber dem Handhebel 3, welche für eine Herbeiführung einer weiteren Bewegung der Zugstange 18 von dem Zangenmaul 11 weg erforderlich ist, mit einer höheren Beaufschlagung des Feder- und/oder Dämpfungselements 37 verbunden ist. Mit dieser Verschwenkung kann die Rolle 36 an einer Kontaktfläche 38 des Feder- und/oder Dämpfungselements 37 abwälzen. Das Feder- und/oder Dämpfungselement 37 erzeugt ein Moment an dem Hebel 22, welches in Richtung des Zangenmauls 11 und entgegengesetzt zu der Bewegung der Zugstange 18 während des Abziehhubs orientiert ist. Somit erzeugt das Feder- und/oder Dämpfungselement 37 eine Kraft, welche den Effekt der schnellen Schließung der Handhebel 2, 3 während des Abziehhubs infolge der verringerten Kräfte zwischen den Abisoliermessern 14a, 14b und dem Teilbereich 33, welches eine Gleitbewegung gegenüber dem elektrischen Leiter 39 ausführt, entgegenwirkt.

Für das dargestellte Ausführungsbeispiel ist das Feder- und/oder Dämpfungselement 37 mit einem Elastomerkörper 40 gebildet, welches bspw. in grober Näherung eine klotzartige Geometrie besitzen kann.

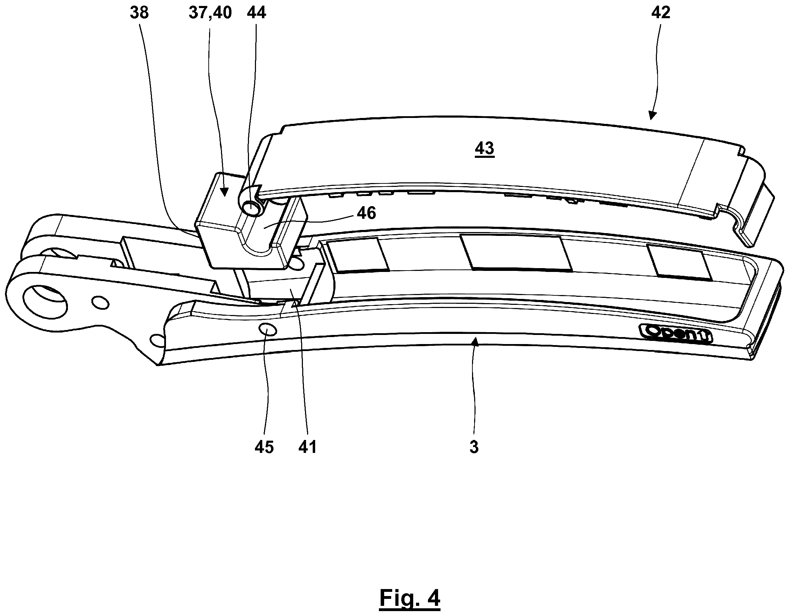

Gemäß **Fig. 4** kann der Handhebel 3 auf der dem Handhebel 2 zugewandten Seite eine Ausnehmung oder Aufnahme 41 besitzen, in welche von der den Handhebel 2 zugewandten Seite das Feder- und/oder Dämpfungselement 37 einsetzbar ist. Vorzugsweise ist in der Aufnahme 41 das Feder- und/oder Dämpfungselement 37 so gehalten, dass dieses bis auf einen Entnahme-Freiheitsgrad in Richtung des anderen Handhebels 2, also quer zur Längserstreckung des Handhebels 3, in dem Handhebel 3 fixiert ist. In Richtung der von der Rolle 36 auf das Feder- und/oder Dämpfungselement 37 applizierten Kontaktkraft ist das Feder- und/oder Dämpfungselement 37 an dem Handhebel spielfrei abgestützt. Eine Sicherung des Feder- und/oder Dämpfungselements 37 in montiertem Zustand in die zuvor genannte Entnahmerichtung kann durch Verrasten oder beliebige Sicherungseinrichtungen erfolgen.

Für das dargestellte Ausführungsbeispiel ist im Bereich des Handhebels 3 eine Vorratseinrichtung 42 gebildet, wie diese in der europäischen Patentanmeldung mit dem amtlichen Aktenzeichen EP 14 177 831.6-1701 offenbart ist. Die Vorratseinrichtung 42 verfügt dabei über einen Deckel 43, welcher die Vorratseinrichtung 42 auf der dem Handhebel 2 zugewandten Seite verschließt. Der Deckel 43 ist an einem Grundkörper des Handhebels 3 verschwenkbar zwischen einer geöffneten Stellung und einer Schließstellung (und umgekehrt) gelagert, wozu der Deckel 43 einen Lagerzapfen 44 besitzt, der in ein Lagerauge 45 eines Grundkörpers des Handhebels 22 einsetzbar ist, bspw. unter elastischer Verformung des Grundkörpers. Für das dargestellte Ausführungsbeispiel ist der Deckel 43 multifunktional, in dem dieser zusätzlich zur Verschließung der Vorratseinrichtung 42 dazu dient, das Feder- und/oder Dämpfungselement 37 in der Aufnahme 41 gegenüber einer Entnahme zu sichern. Zu diesem Zweck liegt das Feder- und/oder Dämpfungselement 37 in Entnahmerichtung an dem Deckel 43 im Bereich des Lagerzapfens 44 an, womit die Entnahmerichtung blockiert ist. Vorzugsweise verfügt das Feder- und/oder Dämpfungselement 37 auf der dem Lagerzapfen 44 zugewandten Seite über eine halbzylindrische, parallel zum Lagerzapfen 44 orientierte Ausnehmung 46, an welcher der Endbereich des Deckels 43 mit dem Lagerzapfen 44 zur Vermeidung der Entnahme des Feder- und/oder Dämpfungselements 37 anliegt, wobei angesichts der Kontur der Ausnehmung 46 eine Verschwenkung des Deckels 43 zwischen der Öffnungs- und Schließstellung desselben ermöglicht ist. Möglich ist auch, dass in der in den Grundkörper des Handhebels 3 eingesetzten Stellung des Deckels 43 das Feder- und/oder Dämpfungselement 37 im Kontaktbereich der Ausnehmung 46 vorgespannt ist.

Ohne dass dies zwingend der Fall ist, kann der Hebel 22 auf beiden Seiten jeweils über eine drehbar gelagerte Rolle 36a, 36b verfügen, welche dann während des Abziehhubs einen Kontakt mit dem Feder- und/oder Dämpfungselement 37 ausbilden, womit die Flächenpressung im Kontakt mit dem Feder- und/oder Dämpfungselement 37 reduziert werden kann.

In dem Ausführungsbeispiel gemäß **Fig. 1 bis 4** sind die folgenden optionalen Zusatzkomponenten und -funktionen dargestellt:
- Mittels einer weiteren Feder 47 kann eine weitere Beeinflussung der Kraftverhältnisse an dem Hebel 22 erfolgen. Vorzugsweise beaufschlagt die Feder 47 während des Schneidhubs den Hebel 22 gegen die Betätigungskontur 28, so dass mittels der Feder 47 auch eine Auslegung des Übergangs von dem Schneidhub zu dem Abreißhub erfolgen kann.
- Möglich ist, dass die Betätigungskontur 28 mit einer Hinterschneidung 48 ausgebildet ist. Gelangt die Rolle 27 in den Bereich der Hinterschneidung 48, kann die Zangenbacke 5, verursacht durch eine Öffnungsfeder 49, automatisch trotz weiterer Schließung der Handhebel 2, 3 einen Öffnungshub ausführen.
- Eine Sicherungseinrichtung gemäß DE 20 2015 100 507.5 ist mit dem Bezugszeichen 50 gekennzeichnet.
- Des Weiteren ist die Abisolierzange 1 hier mit einer Trenneinrichtung 51, welche mit Schließung der Handhebel automatisch nach außen verschlossen oder abgedeckt werden kann, gemäß der europäischen Patentanmeldung mit dem amtlichen Aktenzeichen EP 1 153 683.6 ausgebildet.
- An den Messerhaltern 15a, 15b sind unter Bildung von Schneidelementen 52a, 52b gemäß der europäischen Patentanmeldung mit dem amtlichen Aktenzeichen EP 14 177 826.6 auswechselbar die Abisoliermesser 14a, 14b gehalten.

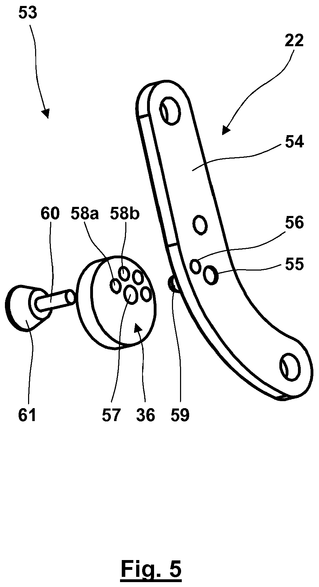

Soll werkseitig oder von einem Benutzer der Abisolierzange 1 der Übergang von dem Abreißhub zu dem Abziehhub, also die Stellung während des Schließhubs, bei welcher die Rolle 36 nach Überwindung eines Spiels 68 erstmalig in Kontakt mit dem Feder- und Dämpfungselement 37 kommt, veränderbar sein, kann eine Verstelleinrichtung 53 Einsatz finden. Für das in Fig. 5 dargestellte Ausführungsbeispiel kann über die Verstelleinrichtung 53 die Lage der Rolle 36 relativ zu dem Grundkörper 54 des Hebels 22 verändert werden, womit sich der Abstand der Rolle 36 von dem Feder- und/oder Dämpfungselement 37 in der Ausgangsstellung der Handhebel 2, 3 ändert. Für das in Fig. 5 dargestellte Ausführungsbeispiel verfügt der Grundkörper 54 des Hebels 22 über eine Lagerbohrung 55 sowie eine Fixierbohrung 56. Die Rolle 36 besitzt in diesem Fall eine Lagerbohrung 57 sowie mehrere Fixierbohrungen 58a, 58b, welche mit einem Abstand von der Lagerbohrung 57 in Umfangsrichtung um die Lagerbohrung 57 verteilt sind, der dem Abstand der Fixierbohrung 56 von der Lagerbohrung 55 des Grundkörpers 54 entspricht. In diesem Fall erfolgt die Montage der Rolle 36 an dem Grundkörper 54 des Hebels 22 durch einen Lagerbolzen 59, welcher sich durch die Lagerbohrungen 55, 57 mit einer Presspassung in diesen erstreckt, sowie einen Fixierbolzen 60, welcher sich ebenfalls unter Ausbildung einer Übergangs- oder Presspassung durch die Fixierbohrung 56 und eine der Fixierbohrungen 58a, 58b erstreckt. Die Lagerbohrung 57 ist exzentrisch an der Rolle 36 vorgesehen. Je nach Wahl der Fixierbohrung 58a, 58b ändert sich angesichts der exzentrischen Anordnung der Lagerbohrung 57 der Abstand der dem Feder- und/oder Dämpfungselement 37 zugewandten, von der Mantelfläche der Rolle 36 ausgebildeten Kontaktfläche, womit eine Einstellung der Stellung in dem Schließhub erfolgen kann, mit deren Erreichung erstmalig die Rolle 36 einen Kontakt mit dem Feder- und/oder Dämpfungselement 37 ausbildet. Angesichts der Befestigung der Rolle 36 sowohl über den Lagerbolzen 59 als auch über den Fixierbolzen 60 ist für diese Ausgestaltung die Rolle 36 nicht drehbar.

Durchaus möglich ist aber auch, dass eine drehbare Befestigung der Rolle 36 an dem Grundkörper 54 über einen Exzenterstift erfolgt, bei welchem ein Axialabschnitt des Exzenterstiftes in der Lagerbohrung 57 aufgenommen ist, während ein anderer, exzentrischer Axialabschnitt des Stiftes drehbar in der Lagerbohrung 57 aufgenommen ist. Durch Verdrehung des Exzenterstiftes kann dann eine Einstellung des Übergangs von dem Abreißhub zu dem Abziehhub erfolgen. In diesem Fall findet kein Fixierbolzen 60 Einsatz.

Vorzugsweise verfügt für das in Fig. 5 dargestellte Ausführungsbeispiel der Fixierbolzen 60 über ein Handhabungselement 61, insbesondere eine konische Verdickung, über welches ein Umstecken des Fixierbolzens 60 von einer Fixierbohrung 58a in eine andere Fixierbohrung 58b herbeigeführt werden kann.

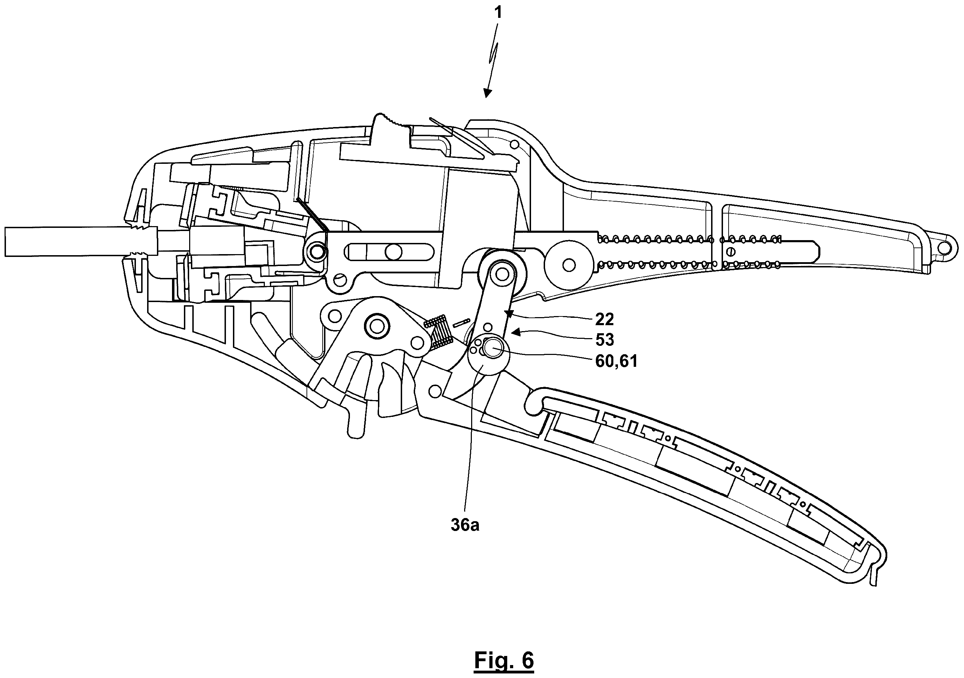

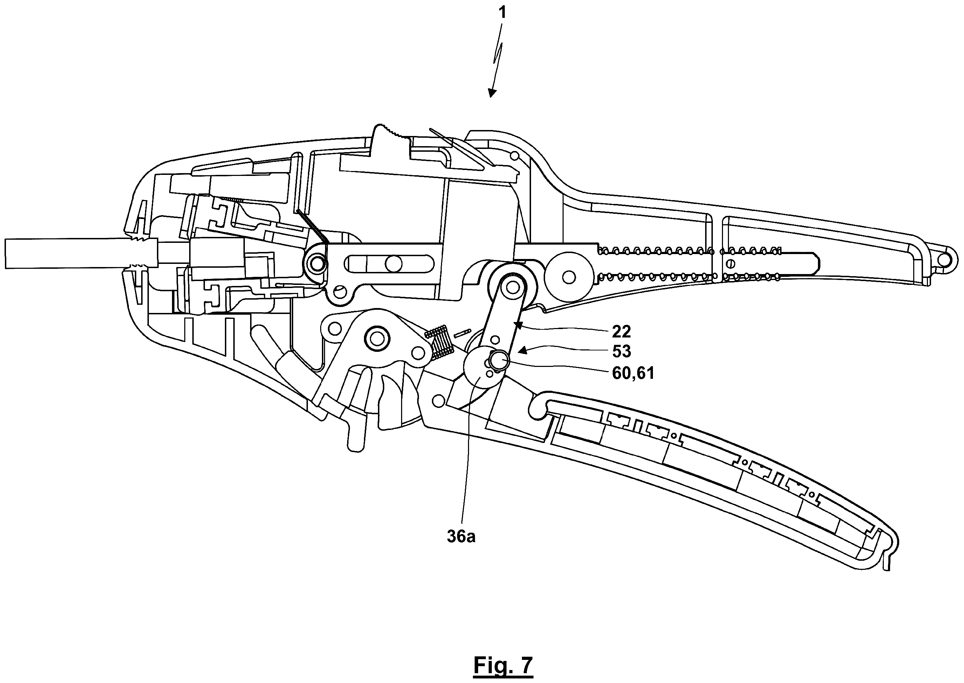

**Fig. 6** **und** **7** zeigen die Verstelleinrichtung 53 in unterschiedlichen Betriebsstellungen, in welchen der Fixierbolzen 60 in unterschiedlichen Fixierbohrungen 58a, 58b, ... angeordnet ist. Zu erkennen ist hierbei, dass die Rolle 36 für die unterschiedlichen Betriebsstellungen der Verstelleinrichtung 53 unterschiedlich weit von dem Grundkörper 54 des Hebels 22 in Richtung des Feder- und/oder Dämpfungselements 37 hervorsteht.

Der Betrieb der Abisolierzange 1 erfolgt wie folgt:
Zunächst wird das Kabel 13 in die Aufnahme 12 der Abisolierzange 1 eingelegt. Hierbei wird über einen einstellbaren Anschlag 62 vorgegeben, wie weit das Kabel 13 in die Aufnahme 12 eingeschoben werden kann. Der Anschlag 62 gibt hierbei die Länge des abzuisolierenden Teilbereichs 33 entsprechend dem Abstand des Anschlags 62 von den Abisoliermessern 14a, 14b vor.

Hieran anschließend werden zunächst die Handhebel 2, 3 in einem Leerhub betätigt, bis das Kabel 13 zwischen Klemmbacken 63a, 63b geklemmt ist und die Abisoliermesser 14a, 14b in Kontakt mit der Mantelfläche der Isolierung des Kabels 13 kommen.

Eine weitere Schließung der Handhebel in einem Schneidhub führt zur Verschwenkung der Zangenbacken 4, 5 aufeinander zu. In dem Schwenkhub führt die Beaufschlagung der Handhebel 2, 3 dazu, dass über die Zangenbacken 4, 5 die Abisoliermesser 14a, 14b gegen das Kabel 13 gepresst werden, womit ein Einschneiden der Isolierung einhergeht. Während des Schneidhubs sind die Randbedingungen des Hebels 22 unverändert, indem der Hebel einerseits in dem Lager 23 gelagert ist und andererseits ohne wälzende Bewegung mit der Rolle 27 an der Betätigungskontur 28 anliegt.

Mit dem Übergang vom Schneidhub zum Abreißhub ändern sich die Randbedingungen des Hebels 22, indem die Rolle 27 entlang der Betätigungskontur 28 wälzt, was mit einer sich vergrößernden Verschwenkung des Hebels 22 einhergeht und die Bewegung der Zugstange 18 mit der Rolle 31 zur Folge hat. Während des Abreißhubs erfolgt die Bewegung der Zugstange 18, ohne dass eine Wechselwirkung des Hebels 22 mit dem Feder- und/oder Dämpfungselement 37 vorhanden ist. Am Ende des Abreißhubs und mit Beginn des Abziehhubs kommt dann die Rolle 36 zur Anlage an das Feder- und/oder Dämpfungselement 37, womit zusätzlich eine Feder- und/oder Dämpfungskraft des Feder- und/oder Dämpfungselements 37 der Vergrößerung des Abziehhubs entgegenwirkt.

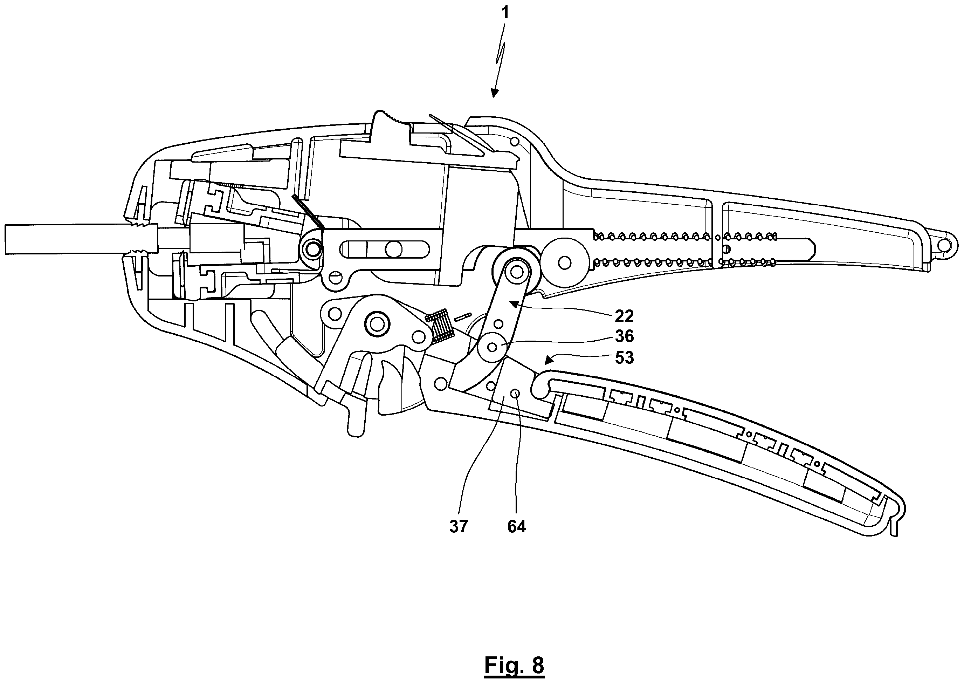

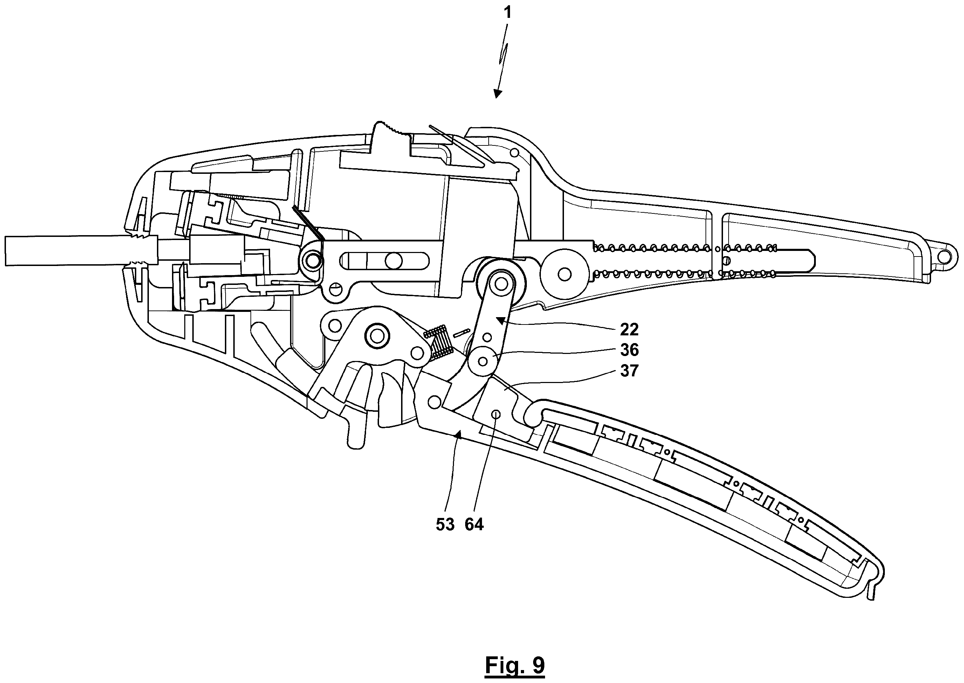

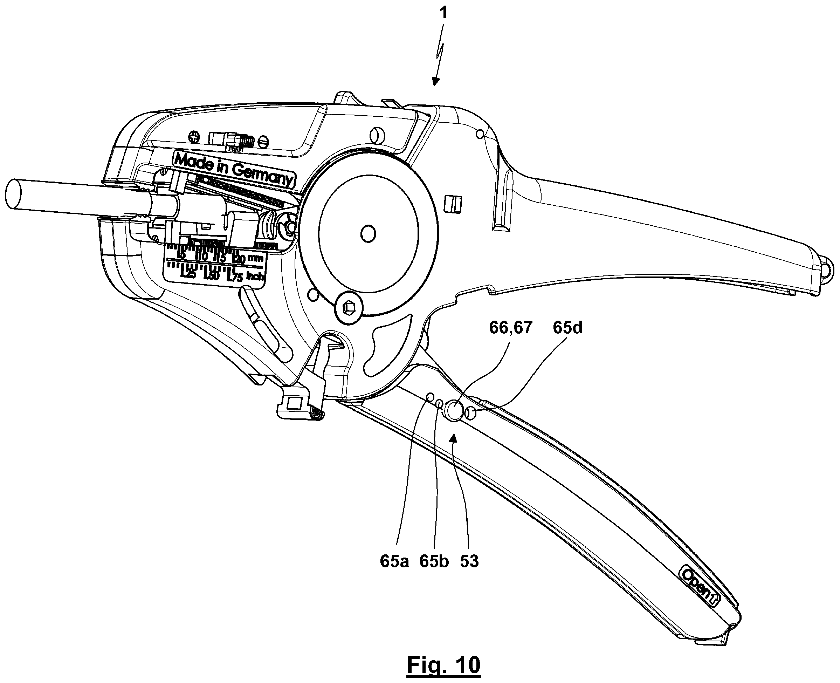

In **Fig. 8 bis** 10 ist eine alternative Ausgestaltung der Verstelleinrichtung 53 dargestellt. Hier rotiert die Rolle 36 um eine nicht verstellbare Rotationsachse an dem Grundkörper 54 des Hebels 22. In diesem Fall ist mittels der Verstelleinrichtung 53 die relative Lage des Feder- und/oder Dämpfungselements 37 an dem Handhebel 3 veränderbar. Hierbei ist die Aufnahme 41 für das Feder- und/oder Dämpfungselement 37 derart ausgebildet, dass das Feder- und/oder Dämpfungselement 37 in der Aufnahme 41 einen begrenzen Freiheitsgrad in Richtung der Längsachse des Handhebels 3 aufweist. Das Feder- und/oder Dämpfungselement 37 besitzt eine Querbohrung 64, während der Handhebel 3 entlang seiner Längserstreckung mehrere Fixierbohrungen 65a, 65b, ... besitzt. In den unterschiedlichen Positionen des Feder- und/oder Dämpfungselements 37 kann dieses mittels eines Fixierbolzens 66 mit einem Handhabungselement 67 gesichert werden, in dem der Fixierbolzen 66 durch eine der Fixierbohrungen 65a, 65b und die Querbohrung 64 gesteckt wird.

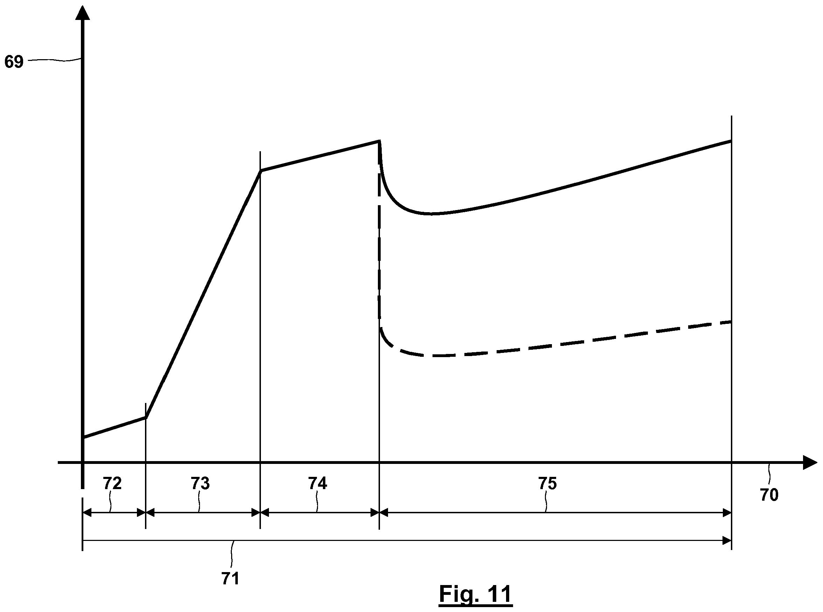

**Fig. 11** zeigt die erforderliche Betätigungskraft 69, die der Benutzer auf die Handhebel 2, 3 aufbringen muss, über dem schließenden Schwenkwinkel 70 des Handhebels 3 gegenüber dem Handhebel 2 während eines Schließhubs 71, der sich zwischen der Öffnungsstellung und der Schließstellung der Handhebel 2, 3 erstreckt. Während eines Leerhubs 72 erfolgt ohne an den Abisoliermessern 14a, 14b erzeugte Gegenkraft eine Schließung der Zangenbacken 4, 5, bis am Ende des Leerhubs 72 die Abisoliermesser 14a, 14b zur Anlage an die Mantelfläche des Kabels 13 gekommen sind. Während des Leerhubs 72 ist die Betätigung der Handhebel 2, 3 mit einer kleinen Betätigungskraft 69 ausreichend, wobei hier infolge der Beaufschlagung der Feder 49 die Betätigungskraft bspw. linear ansteigen kann. In dem anschließenden Schneidhub 73 erfolgt das Einschneiden der Abisoliermesser 14a, 14b in die Isolierung des Kabels 13. Hierbei steigt mit zunehmender Schließung der Handhebel 2, 3 die erforderliche Betätigungskraft 69, da einerseits eine weitere Beaufschlagung der Feder 49 erfolgt und andererseits die Schneidkraft an den Abisoliermessern 14a, 14b aufgebracht werden muss, welche unter Umständen mit zunehmendem Eintritt der Abisoliermesser 14a, 14b in die Isolierung des Kabels 13 ansteigt. Hieran schließt der Abreißhub 74 an, in welchem die Betätigungskraft 69 weiter ansteigt, da die erforderliche Bewegung der Zugstange 18 gegen die Beaufschlagung derselben durch die Feder 32 erfolgen muss. Am Ende des Abreißhubs 74 ist der Teilbereich 33 vollständig von dem restlichen Teil der Isolierung des Kabels 13 abgerissen. Gestrichelt ist in Fig. 11 der Abfall und weitere Verlauf der Betätigungskraft 69 dargestellt, wie sich dieser ohne Einsatz des erfindungsgemäßen Feder- und/oder Dämpfungselement 37 ergibt. Da mit dem Abreißen eine erforderliche Kraft zur elastischen und plastischen Verformung der Isolierung im Verbindungsbereich zwischen dem Teilbereich 33 und dem restlichen Teilbereich der Isolierung entfällt, verringert sich für die nicht erfindungsgemäße Ausgestaltung schlagartig die Betätigungskraft 69, wobei dann in dem Abziehhub 75 lediglich die Gleitreibung zwischen dem Teilbereich 33 und dem elektrischen Leiter des Kabels 13 zu überwinden ist sowie eine etwaige zusätzliche Beaufschlagung der Feder 32 erfolgen muss. Erfindungsgemäß erfolgt über den Abziehhub 75 die zusätzliche Beaufschlagung des Feder- und/oder Dämpfungselements 37, womit der Abfall der Betätigungskraft 69 zumindest vermindert ist, wie mit dem durchgezogen dargestellten Betätigungskraftverlauf während des Abziehhubs 75 in Fig. 11 dargestellt ist.

Es versteht sich, dass der in Fig. 11 dargestellte Verlauf der Betätigungskraft 69 lediglich beispielhaft gewählt ist. So können mit einer erfindungsgemäßen Abisolierzange 1 auch andere Steigungswerte, Kurvenverläufe (geradlinige oder gekrümmte Teilkurven) und/oder Schwellwerte für den Übergang zwischen den einzelnen Teilhüben erzeugt werden.

Möglich ist durchaus, dass das Feder- und/oder Dämpfungselement 37 noch während des Abreißhubs 74 und geringfügig vor (insbesondere mit einem Schwenkwinkel der Handhebel 2, 3 von maximal 8°, 5°, 3° oder 2° vor) Beginn des Abziehhubs 75 mit dem Hebel 22 in Wirkverbindung tritt. Ebenfalls möglich ist aber auch, dass dieses geringfügig nach (insbesondere mit einem Schwenkwinkel der Handhebel 2, 3 von maximal 8°, 5°, 3° oder 2° nach) Beginn des Abreißhubs 74 erfolgt.

Für eine andere Auslegung der erfindungsgemäßen Abisolierzange 1 kommt das Feder- und/oder Dämpfungselement 37 nicht exakt beim Übergang vom Abreißhub 74 zum Abziehhub 75 (beispielsweise für eine axiale Bewegung der Abisoliermesser 14a, 14b während des Abreißhubs von 6,5 mm bis 7,5 mm) zur Wirkung, sondern vielmehr bereits für einen axialen Weg der Abisoliermesser 14a, 14b bis maximal 3,0 mm, 2,0 mm oder 1,0 mm vor oder nach dem Übergang vom Abreißhub 74 zum Abziehhub 75.

Für eine andere Auslegung im Rahmen der Erfindung wird das Feder- und/oder Dämpfungselement 37 wirksam, wenn der Schließhub 71 der Handhebel zu 30 % bis 60 %, insbesondere 40 % bis 50 %, durchlaufen ist.

Für eine andere Ausführungsform kommt das Feder- und/oder Dämpfungselement 37 zur Wirkung während des Abreißhubs 74 oder während der ersten 10 % des Abziehhubs.

Möglich ist herbei, dass die vorgenannten Angaben dafür, für welche Schließstellung der Handhebel 2, 3 und/oder Bewegung der Abisoliermesser 14a, 14b das Feder- und/oder Dämpfungselement 37 zur Wirkung,
a) für einen einzigen zulässigen Kabeldurchmesser,
b) für sämtliche Kabeldurchmesser bei mehreren bestimmungsgemäßen Kabeldurchmessern, die gemäß der Herstellerangabe mit der Abisolierzange 1 abisoliert werden können, oder
c) den größten von mehreren bestimmungsgemäßen Kabeldurchmessern
gelten.

Ebenfalls möglich ist, dass bei mehreren für die Abisolierzange 1 bestimmungsgemäßen Kabeldurchmessern die relative Lage des Übergangs vom Abreißhub 74 zu dem Abziehhub 75 für mindestens einen bestimmungsgemäßen Kabeldurchmesser vor der Schließstellung der Handhebel 2, 3 liegt, für welche das Feder- und/oder Dämpfungselement 37 für den bestimmungsgemäßen Kabeldurchmesser erstmalig zur Wirkung kommt, während die relative Lage des Übergangs vom Abreißhub 74 zu dem Abziehhub 75 für mindestens einen weiteren bestimmungsgemäßen Kabeldurchmesser nach der Schließstellung der Handhebel 2, 3 liegt, für welche das Feder- und/oder Dämpfungselement 37 für den weiteren bestimmungsgemäßen Kabeldurchmesser erstmalig zur Wirkung kommt. Möglich ist aber auch, dass für mehrere bestimmungsgemäße Kabeldurchmesser eine Optimierung die relative Lage der Übergänge vom Abreißhub 74 zu dem Abziehhub 75 zu den Schließstellungen der Handhebel 2, 3, für welche das Feder- und/oder Dämpfungselement 37 für die bestimmungsgemäßen Kabeldurchmesser erstmalig zur Wirkung kommt, erfolgt ist.

Für eine andere Auslegung der erfindungsgemäßen Abisolierzange kann mit dieser, bspw. als größtes Kabel, ein Kabel mit einem Außendurchmesser von 7,5 mm abisoliert werden. In diesem Fall wird bspw. das Feder- und/oder Dämpfungselement wirksam nach 30 % bis 50 % der Schließbewegung der Handhebel 2, 3. Hingegen wird bei dem Abisolieren eines Kabels mit einem Außendurchmesser von 3,5 mm das Feder- und/oder Dämpfungselement wirksam nach 40 % bis 60 % der Schließbewegung 71 der Handhebel 2, 3. Für das Abisolieren eines Kabels mit einem Außendurchmesser von 1,3 mm wird hingegen das Feder- und/oder Dämpfungselement wirksam nach 50 % bis 65 % des Schließhubs der Handhebel 2, 3.

Ohne dass eine Beschränkung auf diese Ausführungsform erfolgen soll, kann bspw. der Schließhub 71 der Handhebel 2, 3 insgesamt über einen Winkel von 30 bis 40°, vorzugsweise 34 bis 38°, erfolgen.

Für das Ausführungsbeispiel gemäß **Fig. 5 bis 7** kann die Rolle 36 auch eine unrunde, nockenartige Mantelfläche besitzen.

Für das dargestellte Ausführungsbeispiel ist die Rolle 36 zwischen den Lagern 23, 25, bspw. ungefähr mittig, an dem Grundkörper 54 des Hebels 22 gelagert oder befestigt.

Grundsätzlich kann die Erfindung Einsatz finden für eine Abisolierzange 1, deren grundsätzlicher Aufbau zur Gewährleistung des Abisolierens des Kabels aus dem Stand der Technik bekannt ist, sofern die Abisolierzange über einen Schneidhub, einen Abreißhub und einen Abziehhub verfügt. Beispielsweise kann hierzu ein Aufbau der Abisolierzange, insbesondere hinsichtlich der Betätigungskinematik und/oder hinsichtlich weiterer Funktionen, gemäß dem eingangs genannten Stand der Technik ausgebildet sein. Um lediglich einige nicht beschränkende Beispiele zu nennen, kann
- die Betätigungskinematik der Abisolierzange entsprechend DE 37 33 358 C1 ausgebildet sein,
- die Abisolierzange mit einem verstellbaren Anschlag zur Begrenzung des Abziehhubs gemäß EP 2 056 416 A2 ausgebildet sein,
- die Abisolierzange mit Handhebeln mit auswechselbaren Griffschalen für die Anpassung an unterschiedliche Größen der Hände des Benutzers gemäß EP 2 056 416 A2 ausgebildet sein,
- eine Ausbildung von Abisoliermessern entweder mit einer quer zur Längserstreckung der Aufnahme für das Kabel orientierten Klinge oder mit mehreren Lamellen gebildeten Messern zur Verbesserung der Anpassbarkeit der Schneidkontur an unterschiedliche Kabelgeometrien ausgestattet sein,
- im Bereich des Zangenmauls ein verschiebbarer Anschlag zwecks Gewährleistung einer einstellbaren Abisolierlänge vorhanden sein,
- die Abisolierzange über eine Trenneinrichtung verfügen, wobei diese auch mit einem Sperrhebel gemäß EP 2 056 416 A2 ausgestattet sein kann,
- die Abisolierzange über auswechselbare Messerkassetten verfügen, in welchen die Abisoliermesser gelagert sind (vgl. EP 2 081 266 A1),
- die Abisolierzange mit Auswerfern entsprechend EP 2 056 416 A2 ausgestattet sein,
- die Abisolierzange mit einer Vorratseinrichtung für die Bevorratung eines Zubehörteils gemäß der europäischen Patentanmeldung mit dem amtlichen Aktenzeichen EP 14 177 831.6-1701 ausgestattet sein,
- die Abisolierzange mit einer Sicherungseinrichtung ausgestattet sein, mittels welcher eine teilweise geschlossene Stellung oder eine vollständig geschlossene Stellung der Abisoliermesser sicherbar ist (vgl. DE 20 2015 100 507.5).

### BEZUGSZEICHENLISTE

- 1: Abisolierzange
- 2: fester Handhebel
- 3: beweglicher Handhebel
- 4: feste Zangenbacke
- 5: bewegliche Zangenbacke
- 6: Grundkörper
- 7: Lager (beweglicher Handhebel)
- 8: Lagerbolzen (beweglicher Handhebel)
- 9: Lager (bewegliche Zangenbacke)
- 10: Lagerbolzen (bewegliche Zangenbacke)
- 11: Zangenmaul
- 12: Aufnahme
- 13: Kabel
- 14: Abisoliermesser
- 15: Messerhalter
- 16: Lager (Messerhalter)
- 17: Lagerbolzen (Messerhalter)
- 18: Zugstange
- 19: Längsachse
- 20: Gleitkontakt
- 21: Antriebsmechanismus
- 22: Hebel
- 23: Lager (beweglicher Handhebel - Hebel)
- 24: Lagerbolzen (beweglicher Handhebel - Hebel)
- 25: Lager (Rolle des Hebels)
- 26: Lagerbolzen (Rolle des Hebels)
- 27: Rolle
- 28: Betätigungskontur
- 29: Lagerbolzen (Rolle an der Zugstange)
- 30: Lager (Rolle an der Zugstange)
- 31: Rolle (Zugstange)
- 32: Feder (Zugstange)
- 33: Teilbereich der Isolierung
- 34: Lager (mittige Rolle)
- 35: Lagerbolzen (mittige Rolle)
- 36: Rolle (für Kontakt mit Feder- und/oder Dämpfungselement)
- 37: Feder- und/oder Dämpfungselement
- 38: Kontaktfläche (Feder- und/oder Dämpfungselement)
- 39: elektrischer Leiter
- 40: Elastomerkörper
- 41: Aufnahme
- 42: Vorratseinrichtung
- 43: Deckel
- 44: Lagerzapfen (des Deckels)
- 45: Lagerauge
- 46: Ausnehmung (Feder- und/oder Dämpfungselement)
- 47: Feder
- 48: Hinterschneidung
- 49: Öffnungsfeder
- 50: Sicherungseinrichtung
- 51: Trenneinrichtung
- 52: Schneidelement
- 53: Verstelleinrichtung
- 54: Grundkörper
- 55: Lagerbohrung
- 56: Fixierbohrung
- 57: Lagerbohrung
- 58: Fixierbohrung
- 59: Lagerbolzen
- 60: Fixierbolzen
- 61: Handhabungselement
- 62: Anschlag
- 63: Klemmbacke
- 64: Querbohrung
- 65: Fixierbohrung
- 66: Fixerbolzen
- 67: Handhabungselement
- 68: Spiel
- 69: Betätigungskraft
- 70: Schwenkwinkel
- 71: Schließhub
- 72: Leerhub
- 73: Schneidhub
- 74: Abreißhub
- 75: Abziehhub

## Patentansprüche

1. Abisolierzange (1) mit zwei Handhebeln (2, 3), deren Schließhub
a) einen Schneidhub (73), für welchen eine Schließbewegung mindestens eines Abisoliermessers (14a, 14b) quer zu einer Längsachse (19) einer Aufnahme (12) für ein abzuisolierendes Kabel (13) in eine Schließstellung erfolgt, wobei in der Schließstellung eine Isolierung eines in der Aufnahme (12) angeordneten Kabels (13) teilweise eingeschnitten ist, so dass ein hülsenartiger Teilbereich (33) der Isolierung teilweise abgetrennt ist,
b) einen Abreißhub (74), für welchen das mindestens eine Abisoliermesser (14a, 14b) in Richtung der Längsachse (19) der Aufnahme (12) für das abzuisolierende Kabel (13) bewegt wird, bis ein Abreißen des hülsenartigen Teilbereichs (33) erfolgt ist, und
c) einen Abziehhub (75), für welchen das mindestens eine Abisoliermesser (14a, 14b) in Richtung der Längsachse (19) der Aufnahme (12) für das abzuisolierende Kabel (13) bewegt wird, womit der zuvor abgerissene hülsenartige Teilbereich (33) gleitend über den elektrischen Leiter (39) des Kabels (13) bewegt wird,
aufweist, wobei
d) ein Feder- und/oder Dämpfungselement (37) vorhanden ist, welches erst mit dem Übergang vom Abreißhub (74) zum Abziehhub (75) zur Wirkung kommt, so dass das Feder- und/oder Dämpfungselement (37)
da) die Kraftverhältnisse an der Abisolierzange (1) während des Schneidhubs (73) und des Abreißhubs (74) nicht beeinflusst und
db) während des Abziehhubes (75) eine der Schließung der Handhebel (2, 3) entgegen gerichtete Feder- und/oder Dämpfungskraft erzeugt,
e) ein Antriebsmechanismus (21) über einen Hebel (22) verfügt, dessen mechanische Randbedingungen sich beim Übergang von dem Schneidhub (73) zu dem Abreißhub (74) ändern, und
f) der Hebel (22) während des Abziehhubs (75) das Feder- und/oder Dämpfungselement (37) beaufschlagt,
**dadurch gekennzeichnet, dass**
g) der Hebel (22) während des Schneidhubs (73) und des Abreißhubs (74) mit einem Spiel (68) zu dem Feder- und/oder Dämpfungselement (37) angeordnet ist, welches mit dem Übergang vom Abreißhub (74) zum Abziehhub (75) beseitigt wird, und
h) das Feder- und/oder Dämpfungselement (37) an dem beweglichen Handhebel (3) gehalten ist.

2. Abisolierzange (1) nach Anspruch 1, **dadurch gekennzeichnet, dass** der Hebel (22) eine Rolle (36) aufweist, welche mit dem Übergang vom Abreißhub (74) zum Abziehhub (75) mit dem Feder- und/oder Dämpfungselement (37) in Wechselwirkung tritt.

3. Abisolierzange (1) nach Anspruch 2, **dadurch gekennzeichnet, dass** der Hebel (22) auf jeder Seite eine Rolle (36a, 36b) aufweist, die eine gemeinsame Rotationsachse besitzen und jeweils mit dem Übergang vom Abreißhub (74) zum Abziehhub (75) mit dem Feder- und/oder Dämpfungselement (37) in Wechselwirkung treten.

4. Abisolierzange (1) nach einem der Ansprüche 1 bis 3, **dadurch gekennzeichnet, dass** das Spiel (68) zwischen dem Feder- und/oder Dämpfungselement (37) und dem Hebel (22) einstellbar ist.

5. Abisolierzange (1) nach Anspruch 4 in Rückbeziehung auf Anspruch 2 oder 3, **dadurch gekennzeichnet, dass** das Spiel (68) zwischen dem Feder- und/oder Dämpfungselement (37) und dem Hebel (22) durch Veränderung der Position der Rotationsachse der mindestens einen Rolle (36) des Hebels (22) veränderbar ist.

6. Abisolierzange (1) nach Anspruch 4 in Rückbeziehung auf Anspruch 2 oder 3, **dadurch gekennzeichnet, dass** das Spiel (68) zwischen dem Feder- und/oder Dämpfungselement (37) und dem Hebel (22) durch exzentrische Verdrehung der Rolle (36) des Hebels (22) und drehfeste Sicherung der Rolle (36) an dem Hebel (22) veränderbar ist.

7. Abisolierzange (1) nach Anspruch 4, **dadurch gekennzeichnet, dass** das Spiel (68) zwischen dem Feder- und/oder Dämpfungselement (37) und dem Hebel (22) durch Veränderung der Position des Feder- und/oder Dämpfungselements (37) veränderbar ist.

8. Abisolierzange (1) nach einem der vorhergehenden Ansprüche, **dadurch gekennzeichnet, dass** das Feder- und/oder Dämpfungselement (37) mit einem Elastomerkörper (40) gebildet ist.

9. Abisolierzange (1) nach einem der vorhergehenden Ansprüche, **dadurch gekennzeichnet, dass** das Feder- und/oder Dämpfungselement (37)
a) in einen Handhebel (3) eingesetzt ist und
b) in dem Handhebel (3) durch die Montage eines Deckels (43) einer im Bereich des Handhebels (3) gebildeten Vorratseinrichtung (42) für eine Bevorratung mindestens eines Zubehörteils gesichert ist.

10. Abisolierzange (1) nach einem der vorhergehenden Ansprüche, **dadurch gekennzeichnet, dass** über die Handhebel (2, 3) auch eine Trenneinrichtung (51) zum Durchtrennen eine Kabels (13) betätigbar ist, wobei das Feder- und/oder Dämpfungselement (37) in einem letzten Teilhub für das Durchtrennen des Kabels (13) durch die Trenneinrichtung (51) wirksam wird.

11. Abisolierzange (1) nach einem der vorhergehenden Ansprüche, **dadurch gekennzeichnet, dass** das Feder- und/oder Dämpfungselement (37) bei einem Abisolieren eines Kabels (13) mit einem Außendurchmesser von
a) 7,5 mm nach 30% bis 50% des Schließhubs (71) der Handhebel (2, 3),
b) 3,5 mm nach 40% bis 60% des Schließhubs (71) der Handhebel (2, 3) und/oder
c) 1,3 mm nach 50% bis 65% des Schließhubs (71) der Handhebel (2, 3) zur Wirkung kommt.

12. Abisolierzange (1) nach einem der vorhergehenden Ansprüche, **dadurch gekennzeichnet, dass** bei mehreren für die Abisolierzange (1) bestimmungsgemäßen Kabeldurchmessern die relative Lage des Übergangs vom Abreißhub (74) zu dem Abziehhub (75) für mindestens einen bestimmungsgemäßen Kabeldurchmesser vor der Schließstellung der Handhebel (2, 3) liegt, für welche das Feder- und/oder Dämpfungselement (37) für den bestimmungsgemäßen Kabeldurchmesser erstmalig zur Wirkung kommt, während die relative Lage des Übergangs vom Abreißhub (74) zu dem Abziehhub (75) für mindestens einen weiteren bestimmungsgemäßen Kabeldurchmesser nach der Schließstellung der Handhebel (2, 3) liegt, für welche das Feder- und/oder Dämpfungselement (37) für den weiteren bestimmungsgemäßen Kabeldurchmesser erstmalig zur Wirkung kommt.

## Claims

1. Stripping pliers (1) comprising two hand levers (2, 3), a closing stroke of the stripping pliers (1) comprising
a) a cutting stroke (73) during which a closing movement of at least one cutting blade (14a, 14b) directed transverse to a longitudinal axis (19) of an accommodation (12) for a cable (13) to be stripped into a closed position takes place, in the closed position an insulation of a cable (13) arranged in the accommodation (12) being partially cut so that a sleeve-like portion (33) of the insulation is partially separated,
b) a break-away stroke (74) during which the at least one cutting blade (14a, 14b) is moved in the direction of the longitudinal axis (19) of the accommodation (12) for the cable (13) to be stripped until the sleeve-like portion (33) has broken away, and
c) a stripping stroke (75) during which the at least one cutting blade (14a, 14b) is moved in the direction of the longitudinal axis (19) of the accommodation (12) for the cable (13) to be stripped such that the previously broken away sleeve-like portion (33) is slidingly moved along an electrical conductor (39) of the cable (13),
d) a spring element and/or damping element (37) being provided which comes into effect approximately at the transition from the brake-away stroke (74) to the stripping stroke (75) such that the spring element and/or damping element (37)
da) does not influence the force conditions at the stripping pliers (1) during the cutting stroke (73) and the brake-away stroke (74) and
db) produces a spring force and/or damping force counteracting a closure of the hand levers (2, 3) during the stripping stroke (75),
e) a drive mechanism (21) comprising a lever (22), the mechanical boundary conditions of the lever (22) changing at the transition from the cutting stroke (73) to the brake-away stroke (74) and
f) the lever (22) biasing the spring element and/or damping element (37) during the stripping stroke (75),
**characterised in that**
g) the lever (22) is arranged with a play (68) to the spring element and /or damping element (37) during the cutting stroke (73) and the brake-away stroke (74), the play (68) being removed at the transition from the brake-away stroke (74) to the stripping stroke (75),
h) the spring element and/or damping element (37) being held at the movable hand lever (3).

2. Stripping pliers (1) of claim 1, **characterised in that** the lever (22) comprises a roller (36) which starts to interact with the spring element and/or damping element (37) at the transition from the brake-away stroke (74) to the stripping stroke (75).

3. Stripping pliers (1) of claim 2, **characterised in that** the lever (22) comprises a roller (36a, 36b) on each side, the rollers (36a, 36b) having a common rotational axis and each starting to interact with the spring element and/or damping element (37) at the transition from the brake-away stroke (74) to the stripping stroke (75).

4. Stripping pliers (1) of one of claims 1 to 3, **characterised in that** the play (68) between the spring element and/or damping element (37) and the lever (22) is adjustable.

5. Stripping pliers (1) of claim 4 when referring back to claim 2 or 3, **characterised in that** the play (68) between the spring element and/or damping element (37) and the lever (22) can be changed by a change of the position of the rotational axis of the at least one roller (36) of the lever (22).

6. Stripping pliers (1) of claim 4 when referring back to claim 2 or 3, **characterised in that** the play (68) between the spring element and/or damping element (37) and the lever (22) can be changed by an eccentric rotation of the roller (36) of the lever (22) and fixation of the roller (36) against rotation at the lever (22).

7. Stripping pliers (1) of claim 4, **characterised in that** the play (68) between the spring element and/or damping element (37) and the lever (22) can be changed by a change of the position of the spring element and/or damping element (37).

8. Stripping pliers (1) of one of the preceding claims, **characterised in that** the spring element and/or damping element (37) is embodied as or comprises an elastomeric body (40).

9. Stripping pliers (1) of one of the preceding claims, **characterised in that** the spring element and/or damping element (37)
a) is inserted into a hand lever (3) and
b) secured in the hand lever (3) by assembling a lid (43) of a storage device (42) realized in the region of the hand lever (3) und designated for storing at least one accessory part.

10. Stripping pliers (1) of one of the preceding claims, **characterised in that** by the hand levers (2, 3) also a severing device (51) for severing a cable (13) can be actuated, the spring element and/or damping element (37) becoming effective in a last stroke part for severing the cable (13) by the severing device (51).

11. Stripping pliers (1) of one of the preceding claims, **characterised in that** the spring element and/or damping element (37) comes into effect during the stripping of a cable (13) having an outer diameter of
a) 7.5 mm after 30% to 50% of the closing stroke (71) of the hand levers (2, 3),
b) 3.5 mm after 40% to 60% of the closing stroke (71) of the hand levers (2, 3) and/or
c) 1.3 mm after 50% to 65% of the closing stroke (71) of the hand levers (2, 3).

12. Stripping pliers (1) of one of the preceding claims, **characterised in that** in the case that the stripping pliers (1) are designated for a plurality of cable diameters, for at least one intended cable diameter the relative position of the transition from the brake-away stroke (74) to the stripping stroke (75) for which the spring element and/or damping element (37) for the first time becomes effective is positioned in front of the closed position of the hand levers (2, 3), whereas for at least one other intended cable diameter the relative position of the transition from the brake-away stroke (74) to the stripping stroke (75) for which the spring element and/or damping element (37) for the first time comes into effect is positioned behind the closed position of the hand levers (2, 3).

## Revendications

1. Pince à dénuder (1), avec deux leviers manuels (2, 3), dont la course de fermeture comporte
a) une course de coupe (73) pour laquelle un mouvement de fermeture d'au moins une lame à dénuder (14a, 14b) s'effectue dans une position de fermeture transversalement à un axe longitudinal (19) d'un logement (12) pour un câble (13) à dénuder, dans laquelle, dans la position de fermeture, une isolation d'un câble (13) disposé dans le logement (12) est incisée partiellement de telle sorte qu'une zone partielle (33) du type manchon de l'isolation est partiellement découpée,
b) une course d'arrachement (74) pour laquelle l'au moins une lame à dénuder (14a, 14b) est déplacée en direction de l'axe longitudinal (19) du logement (12) pour le câble (13) à dénuder jusqu'à ce que soit effectué un arrachement de la zone partielle (33) du type manchon, et
c) une course d'enlèvement (75) pour laquelle l'au moins une lame à dénuder (14a, 14b) est déplacée en direction de l'axe longitudinal (19) du logement (12) pour le câble (13) à dénuder, ce qui fait que la zone partielle (33) du type manchon arrachée antérieurement est déplacée par glissement sur le conducteur (39) électrique du câble (13),
dans lequel
d) un élément à ressort et/ou d'amortissement (37) est présent, qui ne produit son effet que lors du passage de la course d'arrachement (74) à la course d'enlèvement (75) de telle sorte que l'élément à ressort et/ou d'amortissement (37)
da) n'influence pas les rapports de force au niveau de la pince à dénuder (1) pendant la course de coupe (73) et la course d'arrachement (74) et
db) pendant la course d'enlèvement (75), produit une force de ressort et/ou d'amortissement dirigée à l'opposé de la fermeture des leviers manuels (2, 3),
e) un mécanisme d'entraînement (21) dispose d'un levier (22) dont les conditions marginales mécaniques varient lors du passage de la course de coupe (73) à la course d'arrachement (74), et
f) le levier (22) agit sur l'élément à ressort et/ou d'amortissement (37) pendant la course d'enlèvement (75),
**caractérisée en ce que**
g) pendant la course de coupe (73) et la course d'arrachement (74), le levier (22) est disposé avec un jeu (68) par rapport à l'élément à ressort et/ou d'amortissement (37) qui est supprimé lors du passage de la course d'arrachement (74) à la course d'enlèvement (75), et
h) l'élément à ressort et/ou d'amortissement (37) est retenu sur le levier manuel (3) mobile.

2. Pince à dénuder (1) selon la revendication 1, **caractérisée en ce que** le levier (22) comporte un galet (36) qui entre en interaction avec l'élément à ressort et/ou d'amortissement (37) lors du passage de la course d'arrachement (74) à la course d'enlèvement (75).

3. Pince à dénuder (1) selon la revendication 2, **caractérisée en ce que** le levier (22) comporte de chaque côté un galet (36a, 36b), lesquels possèdent un axe de rotation commun et entrent respectivement en interaction avec l'élément à ressort et/ou d'amortissement (37) lors du passage de la course d'arrachement (74) à la course d'enlèvement (75).

4. Pince à dénuder (1) selon l'une des revendications 1 à 3, **caractérisée en ce que** le jeu (68) entre l'élément à ressort et/ou d'amortissement (37) et le levier (22) est réglable.

5. Pince à dénuder (1) selon la revendication 4 en ce qu'elle dépend de la revendication 2 ou 3, **caractérisée en ce que** le jeu (68) entre l'élément à ressort et/ou d'amortissement (37) et le levier (22) peut être modifié par la modification de la position de l'axe de rotation de l'au moins un galet (36) du levier (22).

6. Pince à dénuder (1) selon la revendication 4 en ce qu'elle dépend de la revendication 2 ou 3, **caractérisée en ce que** le jeu (68) entre l'élément à ressort et/ou d'amortissement (37) et le levier (22) peut être modifié par une torsion excentrique du galet (36) du levier (22) et par un blocage fixe en rotation du galet (36) sur le levier (22).

7. Pince à dénuder (1) selon la revendication 4, **caractérisée en ce que** le jeu (68) entre l'élément à ressort et/ou d'amortissement (37) et le levier (22) peut être modifié par une modification de la position de l'élément à ressort et/ou d'amortissement (37).

8. Pince à dénuder (1) selon l'une des revendications précédentes, **caractérisée en ce que** l'élément à ressort et/ou d'amortissement (37) est formé avec un corps élastomère (40).

9. Pince à dénuder (1) selon l'une des revendications précédentes, **caractérisée en ce que** l'élément à ressort et/ou d'amortissement (37)
a) est inséré dans un levier manuel (3) et
b) est bloqué dans le levier manuel (3) par le montage d'un couvercle (43) d'un dispositif de stockage (42) formé dans la zone du levier manuel (3) pour un stockage d'au moins un accessoire.

10. Pince à dénuder (1) selon l'une des revendications précédentes, **caractérisée en ce qu'**également un système de séparation (51) destiné à la découpe d'un câble (13) peut être actionné par le biais des leviers manuels (2, 3), dans lequel l'élément à ressort et/ou d'amortissement (37) s'active dans une dernière course partielle pour le découpage du câble (13) par le système de séparation (51).

11. Pince à dénuder (1) selon l'une des revendications précédentes, **caractérisée en ce que** l'élément à ressort et/ou d'amortissement (37) produit son effet
a) après 30 à 50 % de la course de fermeture (71) des leviers manuels (2, 3) lors d'un dénudement d'un câble (13) ayant un diamètre extérieur de 7,5 mm,
b) après 40 à 60 % de la course de fermeture (71) des leviers manuels (2, 3) lors d'un dénudement d'un câble (13) ayant un diamètre extérieur de 3,5 mm et/ou
c) après 50 à 65 % de la course de fermeture (71) des leviers manuels (2, 3) lors d'un dénudement d'un câble (13) ayant un diamètre extérieur de 1,3 mm.

12. Pince à dénuder (1) selon l'une des revendications précédentes, **caractérisée en ce que,** en présence de plusieurs diamètres de câble appropriés pour la pince à dénuder (1), l'emplacement relatif du passage de la course d'arrachement (74) à la course d'enlèvement (75) pour au moins un diamètre de câble adapté à l'usage prévu se situe avant la position de fermeture des leviers manuels (2, 3) pour laquelle l'élément à ressort et/ou d'amortissement (37) produit son effet pour la première fois pour le diamètre de câble adapté à l'usage prévu tandis que l'emplacement relatif du passage de la course d'arrachement (74) à la course d'enlèvement (75) pour au moins un autre diamètre de câble adapté à l'usage prévu se situe après la position de fermeture des leviers manuels (2, 3) pour laquelle l'élément à ressort et/ou d'amortissement (37) produit son effet pour la première fois pour l'autre diamètre de câble approprié.
